# EUROPEAN PATENT SPECIFICATION

(11) **EP 4 488 820 B1**
(45) Date of publication and mention of the grant of the patent: **10.09.2025**
(21) Application number: 23183657.8
(22) Date of filing: 05.07.2023
(51) Int. Cl.: G06F 7/00, G06F 7/544, G06F 9/50

(54) **TENSORS PROCESSING METHODS, DEVICES AND SYSTEMS**
TENSORENVERARBEITUNGSVERFAHREN, -VORRICHTUNGEN UND -SYSTEME
PROCÉDÉS, DISPOSITIFS ET SYSTÈMES DE TRAITEMENT DE TENSEURS

(43) Date of publication of application: 08.01.2025
(73) Proprietor: aiMotive Kft., 1025 Budapest (HU)
(72) Inventor: KALYDI, Balázs, 1035 Budapest (HU); NAGY, Gyula, 1114 Budapest (HU)
(74) Representative: Valvoda, Jakob

(56) References cited:
- WO-A1-2022/068663
- WO-A1-2022/260656
- US-A1- 2021 182 684

## Description

### TECHNICAL FIELD

The disclosure relates to optimizations in tensors processing, and related methods, media, devices and systems.

### BACKGROUND

Modern data computations increasingly require high performance computing systems. They often involve usage of high-speed processors and high memory consumption. However, standard high performance computing systems cannot be used on certain platforms, such as portable or on-board platforms, and trade-offs often need to be made between required processing performance and affordable computing means. This is particularly the case for on-board processing systems which may be required to execute complex tasks that may involve machine learning computations, complex data structures, such as tensor data structures, and complex processes, for example involving convolutional neural networks (CNN), with limited computational resources.

### SUMMARY

There is a need for optimizations of processing techniques to better meet performance expectations with limited computing resources (e.g., in terms of processing capacity and memory) and reduced power consumption. Thus, it is an object of the invention to address the above-identified deficiencies.

The invention is defined by a method, one or more computer-readable media and a device according to the independent claims. Preferred embodiments are specified in the dependent claims.

In a first aspect of the disclosure, there is provided a method for processing tensors. The method comprises providing a component of a first tensor in a memory unit, determining one or more first operations that use at least the component of the first tensor as input, and iterating through the one or more first operations in a first loop. This includes, for a current operation of the one or more first operations in the first loop, if there are enough data in the first tensor including the component of the first tensor for the current operation to calculate a component of a second tensor using the component of the first tensor: calculating the component of the second tensor using the current operation applied at least to the component of the first tensor, writing the component of the second tensor into the memory unit, if any part of at least the component of the first tensor is no longer required by any next operation of the first loop, de-allocating the part of at least the component of the first tensor from the memory unit, and launching and iterating through a second loop embedded in the first loop, the second loop including one or more second operations that use at least the component of the second tensor as input. If there are not enough data in the first tensor including the component of the first tensor for the current operation to calculate the component of the second tensor using the component of the first tensor, this includes continuing with a next operation of the one or more first operations in the first loop.

In a preferred embodiment, the one or more first operations and the one or more second operations may be operations of an operation graph indicating input and output dependencies between the operations. The input and output dependencies may be tensor dependencies between, e.g., an output tensor generated by an operation, which can be used as input tensor for a subsequent operation. Operations generating input for other operations may be designated as parent operations and/or the other operations receiving the output may be designated as child operations. Accordingly, one or more loop embedding parent operation(s) of a child operation may be designated as a parent loop for the respective child operation or the loop including the respective child operation. Conversely, one or more loop embedded child operation(s) of parent operation(s) may be designated as a child loop of the respective parent operation(s) or of the parent loop including the respective parent operation(s). For instance, the first loop may be a parent loop of the second loop according to the operation graph.

In one embodiment, the operation graph may represent one or more operations to be executed based on an input tensor to generate an output tensor. Accordingly, execution of the entire operation graph based on the input tensor may result in the output tensor. In one embodiment, the first tensor may be the input tensor to the operation graph. Additionally or as an alternative, the second tensor may be the output tensor.

According to a particularly preferred embodiment, the method may comprise, if the current operation is a last operation in the first loop, determining whether the first loop is embedded in another parent loop, and if the first loop is embedded in the other parent loop, returning to the other parent loop and continuing iteration through one or more operations in the other parent loop.

According to another embodiment, iterating through the second loop may include: for a second current operation of the one or more second operations in the second loop, if there are enough data in the second tensor including the component of the second tensor for the second current operation to calculate a component of a third tensor using the component of the second tensor: calculating the component of the third tensor using the second current operation applied at least to the component of the second tensor, writing the component of the third tensor into the memory unit, if any part of at least the component of the second tensor is no longer required by any next operation of the second loop, de-allocating the part of at least the component of the second tensor from the memory unit, and launching and iterating through a third loop embedded in the second loop, the third loop including one or more third operations that use at least the component of the third tensor as input; and if there are not enough data in the second tensor including the component of the second tensor for the second current operation to calculate the component of the third tensor using the component of the second tensor, continuing with a next operation of the one or more second operations in the second loop. According to some aspects of the disclosure, the method for processing tensors may preferably follow a depth-first search (DFS) strategy. However, the disclosure of the present application is not limited to the application of such a strategy and other kinds of graph traversal strategies are also contemplated. For instance, the method may alternatively apply a breadth-first search (BFS) strategy or a hybrid form, including DFS and BFS.

In yet another embodiment, for the current operation of the one or more first operations in the first loop, if there are enough data in the first tensor including the component of the first tensor for the current operation to calculate the component of the second tensor using the component of the first tensor, the method may further include: allocating memory space for the component of the second tensor in the memory unit and writing the component of the second tensor into the allocated memory space of the memory unit.

According to another embodiment, the first tensor may be a three-dimensional tensor having a horizontal dimension, a vertical dimension and a depth dimension and the component of the first tensor may be a group of data of the first tensor arranged at least partially in a dimension. The first tensor may be defined as including x elements in a horizontal dimension, y elements in a vertical dimension, and/or z elements in a depth dimension. Preferably, the component of the first tensor is a group of data of the first tensor arranged at least partially in the horizontal dimension and/or the depth dimension. Alternatively, the component of the first tensor is a group of data of the first tensor arranged at least partially in a vertical dimension and/or the depth dimension. In addition, iterating through the one or more first operations in a first loop may include determining, for the current operation of the one or more first operations in the first loop, whether there are enough data in the first tensor including the component of the first tensor for the current operation to calculate a component of a second tensor using the component of the first tensor. In some embodiments, this determining may comprise determining whether the available data in the first tensor on which the current operation is to execute are arranged in full extend in the depth dimension. In an embodiment, if it is determined that the available data in the first tensor on which the current operation is to execute are arranged in full extend in the depth dimension, it is determined that there are enough data in the first tensor including the component of the first tensor for the current operation to calculate a component of a second tensor using the component of the first tensor. Additionally or as an alternative, if it is determined that the available data in the first tensor on which the current operation is to execute are not arranged in full extend in the depth dimension, it is determined that there are not enough data in the first tensor including the component of the first tensor for the current operation to calculate a component of a second tensor using the component of the first tensor.

In a preferred embodiment, the one or more first operations may be kernel operations, e.g. filter kernel operations, having each a respective kernel with a respective kernel size, wherein calculating the component of the second tensor using the current operation applied at least to the component of the first tensor includes applying a kernel of the current operation on data of the component of the first tensor. Preferably, the method may further comprise determining whether any part of at least the component of the first tensor is no longer required by any next operation of the first loop based on a maximum kernel size of kernels of next operations in the first loop. A kernel may be referred to as a filter kernel or simply a filter throughout this disclosure. A kernel is a matrix (typically 3x3, 5x5, 7x7, or any particular size) of weights that is applied to a tensor (e.g., the first tensor), or a component of the tensor (e.g. the component of the first tensor), preferably through a convolution operation. This may include sliding the kernel over the tensor, preferably taking an element-wise product of overlapping entries of the component of the tensor and respective entries in the kernel, and then summing them to produce a single output value. This process is repeated over the entire tensor, resulting in a new tensor. The tensor and/or the new tensor may be called a feature map or convolutional layer input/output.

In one embodiment, the method may further comprise, for the current operation of the one or more first operations in the first loop, if there are enough data in the first tensor including the component of the first tensor for the current operation to calculate the component of the second tensor using the component of the first tensor, marking the current operation as processed. For instance, such a marking may take place after or before calculating the component of the second tensor using the current operation applied at least to the component of the first tensor.

According to another embodiment, the memory unit may be a local memory unit of a device. In this embodiment, providing the component of the first tensor in the memory unit may comprise receiving the component of the first tensor from an external memory and storing the component of the first tensor in the local memory unit of the device.

A second aspect of the disclosure defines one or more computer readable media storing instructions thereon that, when executed on a device, configure the device to perform a method according to any embodiment of the first aspect of the disclosure.

In a third aspect of the disclosure, there is provided a device comprising a local memory unit and a processing unit, wherein the processing unit is configured to perform a method according to any embodiment of the first aspect of the disclosure.

Preferably, in a fourth aspect of the disclosure, there is provided a computing system that includes at least one processor, a system memory and at least one device. The at least one device may be a device according the third aspect of the disclosure. In a preferred embodiment, the at least one processor may be configured to store an input tensor in the system memory, provide a component of the input tensor to the at least one device, receive an output tensor from the at least one device and store the output tensor in the system memory.

Many of the attendant features will be more readily appreciated as they become better understood by reference to the following detailed description considered in connection with the accompanying drawings.

### BRIEF DESCRIPTION OF THE DRAWINGS

Specific features, aspects, and advantages of the disclosure will be better understood with regard to the following description and accompanying drawings, wherein:
- Fig. 1A: illustrates an exemplary computing system and a device according to embodiments of the disclosure;
- Fig. 1B: illustrates an example of tensor and a component thereof according to embodiments of the disclosure;
- Fig. 2: illustrates an example of operation graph associated with a device according to embodiments of the disclosure;
- Fig. 3A: shows a flow diagram of a method according to an embodiment of the disclosure;
- Fig. 3B: shows additional exemplary steps of a method according to an embodiment of the disclosure;
- Fig. 3C: illustrates details of a method according to an embodiment of the disclosure;
- Fig. 4: shows an exemplary flow diagram of a method for processing an input tensor in accordance with embodiments of the disclosure;
- Fig. 5A: shows another example of operation graph according to embodiments of the disclosure;
- Fig. 5B: illustrates an instant view of the memory allocation for tensors during a processing of the operations of the operation graph of Fig. 5A according to embodiments of the disclosure.

### DETAILED DESCRIPTION

In the following description, reference is made to drawings which show by way of illustration various embodiments. Also, various embodiments will be described below by referring to several examples. It is to be understood that the embodiments may include changes in design and structure without departing from the scope of the claimed subject matter. It is not intended to represent the only forms in which the present example may be constructed or utilized. However, the same or equivalent functions and sequences may be accomplished by different examples. Furthermore, as used in this application and in the claims, the singular forms "a," "an," and "the" include the plural forms unless the context clearly dictates otherwise. Additionally, the term "includes" means "comprises." Further, the term "coupled" encompasses mechanical, electrical, magnetic, optical, as well as other practical ways of coupling or linking items together, and does not exclude the presence of intermediate elements between the coupled items.

The techniques described herein may be implemented in various computing environments, examples of which are described in greater detail below. Such environments generally involve the use of suitably-configured computing devices implementing a number of modules, each providing one or more operations needed to complete execution of such techniques. Each module may be implemented in its own way; all need not be implemented the same way. As used herein, a module may be a structural component of a system which performs an operational role, which may be a portion of or an entire software element (e.g., a function of a process, a discrete process, or any other suitable embodiment). A module may comprise computer-executable instructions and may be encoded on a computer storage medium. Modules may be executed in parallel or serially, as appropriate, and may pass information between one another using a shared memory on the computer on which they are executing, using a message passing protocol or in any other suitable way.

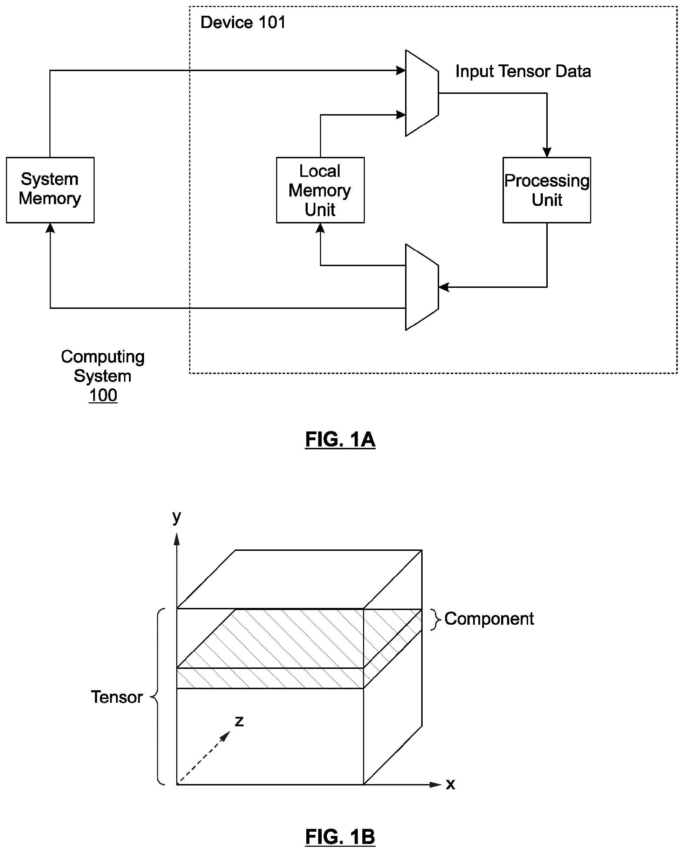

Fig. 1A illustrates an exemplary computing system 100 and a device 101 according to an embodiment of the disclosure. The computing system 100 may be provided to execute operations (e.g. arithmetic operations) or calculations on one or more tensors. A tensor may represent a multi-dimensional data set. For instance, a tensor may represent a data matrix of, e.g., two or more dimensions.

Fig. 1B illustrates a tensor as a 3D data array with a horizontal dimension, a vertical dimension, and a depth dimension. Other kinds of tensors may be used and are contemplated by the disclosure, such as a scalar or one-dimensional data set, which may be referred to as a vector, a two-dimensional data set, which may be referred to as a matrix, a three-dimensional data set, a four-dimensional data set or a data set of any other dimension.

The computing system 100 may comprise at least one processor (not shown) and a system memory and may be configured to perform at least one global computational task based on input data. The computing system 100 may be provided with to-be-processed data stored in the system memory that are to be processed to obtain an output result. The global computational task may comprise one or more mathematical operations, including floating point operations, integer operations, or Boolean operations, and may include one or more operations on one or more tensors. In some embodiments, at least some of the operations of the global computational task may represent operations of a convolutional neural network, CNN.

To efficiently process the global computational task, one or more devices 101 associated with the computing system 100 may be configured to process the to-be-processed data and generate a required output result. For instance, as shown in Fig. 1A, at least one device 101 may be in communication with the computing system 100 (e.g., with the at least one processor of the computing system 100 and/or the system memory) to process input data associated with one or more computational operations and return respective output data to the computing system. The device 101 may be provided in the computing system 100 (e.g. integrated in the computing system 100). For instance, it may be a separate dedicated device having its own processing unit in the computing system 100, such as an accelerator, a CPU or GPU platform, and/or embodied as a SoC (System on Chip) or the like. For instance, the device 101 may be an accelerator device and/or may be implemented at least partially using a GPU-based component connected to the computing system 100. In other embodiments, the device 101 may communicate with the computing system 100 via (local) intermediate means (e.g., a bus, an interconnect, or a network) and/or may be remote from the computing system 100 using a network connection to communicate with the computing system 100. The device 101 may include a local memory unit and/or a processing unit. The processing unit may be an arithmetic unit and may comprise one or more processing cores.

The one or more computational operations associated with the device 101 may include all operations of the global computational task, or, alternatively, only a part of them. For instance, the one or more computational operations associated with the device 101 may correspond to one or more operations of a certain subtask of the global computational task. In this case, the computing system 100 may be provided with a plurality of devices 101 each configured to process a respective subtask of the global computational task. Each device 101 of the plurality of devices 101 may be configured to process an associated subtask of the global computational task. The processing may include a collaborative interaction with one or more of the other devices 101, wherein some of the plurality of devices 101 may be configured to execute some subtasks of the global computational task in parallel. Each device 101 of the plurality of devices 101 may receive respective input data from the system memory and return respective output data to the system memory.

In an embodiment, the to-be-processed data to be processed according to the global computational task may be one or more images or image frames (e.g. RGB and/or depth image data or the like) captured by an imaging device and obtained by the computing system 100, and the global computational task may comprise image data processing subtasks based on the one or more images or image frames. For instance, the global computational task may comprise an image filtering process, preferably performed in real time or nearly in real-time, and/or may aim at extracting one or more features from the one or more images or image frames. However, the to-be-processed data are not limited to one or more images or image frames and may alternatively be, or additionally include, data from other hardware or synthetic sensors, such as acoustic data, radio wave data, lidar data, radar date, and the like in any combination.

The global computational task may be based on tensors and/or one or more operations associated with a CNN. For instance, in an embodiment, the computing system 100 may be configured to pass one or more parts of the to-be-processed data to the device 101 formatted as one or more components of an input tensor. The device 101 may be configured to perform its associated one or more computational operations based on one or more components of the input tensor to generate one or more components of an output tensor. The device 101 may then return the one or more components of the output tensor to the computing system 100 for e.g. storage in the system memory. For instance, the one or more components of the output tensor received from the device 101 may be written into the system memory, which is external to the device 101 (i.e., an external memory for the device 101). In an embodiment, the device 101 may be configured to return the one or more components of the output tensor only if all the components of the output tensor (e.g. all components constituting the output tensor) have been generated.

In an embodiment, any tensor involved in the one or more computational operations (e.g. the input tensor, any intermediate tensor and/or the output tensor) may be a 2-D data array (e.g. 2D matrix). In such a case, a component of a tensor may correspond to a data line, or a group of data lines. For instance, if the tensor has horizontal and vertical dimensions, a component could correspond to multiple vertically neighboring lines.

In an embodiment, the device 101 may be configured to sequentially receive and process the one or more components of the input tensor received from the computing system 100 to sequentially generate corresponding one or more components of the output tensor. For instance, some components of the input tensor may be fed sequentially to the device 101 and processed in parallel in the device 101 as soon as they are received to sequentially generate corresponding components of the output tensor. This has the advantage of accelerating the generation of all components of the output tensor.

In an embodiment, considering the case where to-be-processed data comprise one or more images or image frames, the computing system 100 may be configured to successively obtain one or more parts of an image frame of the to-be-processed data and to transmit them to the device 101 as the one or more components of the input tensor. In an embodiment, at least some of the one or more parts of the image frame may correspond to consecutive data obtained from a scan of a part of the image frame. For instance, the part may be obtained by scanning the frame in a horizontal or vertical direction (e.g. according to a raster scan order) and/or may correspond to consecutive neighboring data or neighboring blocks of data in the frame. For instance, the part may correspond to neighboring pixel data (e.g. a pixel row, a subpart of a pixel row, or consecutive data in one or more rows of the image frame). Additionally or alternatively, the part of the image frame may correspond to data of neighboring blocks of pixels (e.g. 8x8 pixel cells) in the image frame.

In an embodiment, the one or more components of the input tensor received by e.g. the device 101 from the computing system 100 may be one or more lines of data of a frame (e.g. one or more pixel rows of an image frame). As soon as one line of data is received in the input tensor, the device 101 may start to process said line of data and execute the one or more computational operations associated with the device 101 based on said line of data. In an embodiment, the device 101 may be particularly configured to process one or more lines of data received sequentially in parallel, e.g. by processing each line of data according to the one or more computational operations of the device 101 as soon as the line is received.

In some embodiments, the input tensor may correspond to a three-dimensional tensor (e.g. a 3D data array) having a horizontal dimension, a vertical dimension and a depth dimension. This is illustrated by Fig. 1B. A component of the one or more component of the input tensor received by the device 101 may correspond to a group of data arranged at least partially in a dimension, e.g. in the horizontal dimension (e.g. in x dimension), in the vertical dimension (e.g. in y dimension) and/or the depth dimension (e.g. in z dimension). For instance, when the one or more components of the input tensor are received sequentially from the computing system, the one or more components of the input tensor may be stored sequentially according to their order of arrival along the vertical dimension (e.g. in y dimension) in the input tensor. In this example, they may build a stack of components sequentially stored in the input tensor. For instance, each component may correspond to a slice, a piece of a slice or a group of one or more pieces of slices of data in the input tensor. The one or more components of the input tensor may also correspond to one or more lines of data (e.g. juxtaposed in the horizontal dimension and/or each arranged in full extent in the depth dimension) in the input tensor. In an embodiment, the data forming the one or more components of the input tensor may be received depth-wise. In an embodiment, a component of the input tensor may comprise one or more neighboring lines of data arranged in full depth and covering together a limited range in the vertical and/or the horizontal direction. For instance, a component of the input tensor may be considered successfully received only if its data are arranged in full depth in the input tensor.

According to an embodiment of the disclosure, the one or more computational operations associated with the device 101 may require numerous memory accesses. However, the system memory of the computing system 100, albeit usually offering a large memory capacity, may be slow and involve high power consumption. To avoid degradation of the computation throughput due to multiple memory accesses to the system memory and minimize power consumption, the device 101 may include a (local) memory unit.

For instance, the (local) memory unit may be preferably configured to be faster than the system memory and/or have a low power consumption. For instance, the memory unit can be implemented as a one or more dedicated cache memories and/or include one or more SRAMs and/or one or more high-speed DRAMs, however, the present disclosure is not limited to a particular hardware implementation. The device 101 may be configured to store in the (local) memory unit the one or more components of the input tensor, the one or more components of the output tensor, and/or one or more components of one or more intermediate tensors corresponding to one or more intermediate results of the one or more computational operations. Hence, by using a (local) memory unit in the device 101, the amount of memory accesses to the (external) system memory can be reduced, thereby reducing power consumption caused by external memory accesses. Additionally, it enables maximizing the data rate and/or throughput of the processing unit of the device 101.

However, since space on the device 101 may be limited due to e.g. a limited form factor or limits in terms of silicon real estate or chip area, the size of the (local) memory unit may be limited. Due to the amount of data in the to-be-processed data, the device may be configured to implement memory management approaches for the (local) memory unit to avoid costly accesses to the system memory.

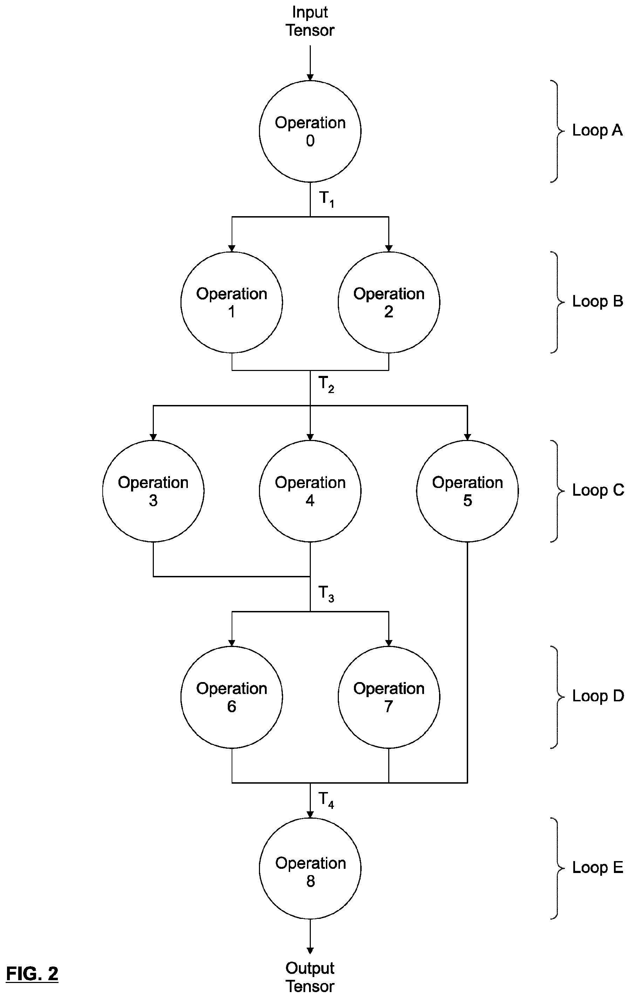

Fig. 2 shows an exemplary graph of one or more computational operations. For instance, the graph is an operation graph and may correspond to the one or more computational operations associated with the device 101 as shown in Fig. 1A. The operation graph may represent one or more operations to be executed based on an input tensor to generate an output tensor. Each operation may receive as input a tensor and may generate as output an (intermediate) tensor that may be supplied as input to other operations. For instance, the device 101 may be configured to receive one or more components of the input tensor and process the one or more components of the input tensor according to the operation graph to generate one or more corresponding components of the output tensor.

The operation graph may define computational interdependencies between the operations. It may comprise any number N of operations, N being an integer above or equal to one. Fig. 2 illustrates an exemplary operation graph including nine operations (operation 0, operation 1, ..., operation 8). For instance, operation 0 of the operation graph is performed on the input tensor. Its result is an intermediate tensor T1, which serves in turns as input to operation 1 and operation 2 to generate another intermediate tensor T2. Further, T2 is used as input by operations 3, 4 and 5. The result of operations 3 and 4 is provided in intermediate tensor T3, which is, itself, used as input by operations 6 and 7. However, the result of operation 5 is not provided in intermediate tensor T3 but in intermediate tensor T4 combined with the result of operations 6 and 7. Finally, intermediate tensor T4 is used as input by operation 8 to generate the output tensor. Hence, the operation graph indicates input and output tensor dependencies between the operations of the operation graph.

Preferably, the operations of the operation graphs may be organized in one or more loops of operations. For instance, one or more operations that use a same tensor as input may belong to a same loop of operation. For instance, since operations 1, 2 in Fig. 2 use intermediate tensor T1 as input, they may belong to a same loop of operation (e.g., loop B in Fig. 2). By analogy, operation 0 can also represent an own loop of operation (e.g., loop A in Fig. 2), albeit comprising a single operation. Similarly, operations 3, 4 and 5 in Fig. 2 may belong to a same loop of operation (e.g., loop C in Fig. 2) since they all use intermediate tensor T2 as input. Operations 6 and 7 may belong to loop D and operation 8 to loop E in Fig. 2.

The one or more computational operations associated with the device 101 and illustrated in Fig. 2 may include one or more of a floating point operation, an integer operation, a Boolean operation, a convolution operation, a max pooling operation and an arg max operation. However, this list is not exhaustive and other kinds of computational operations are also contemplated by the disclosure.

The one or more computational operations associated with the device 101 may comprise all operations of the global computational task defined above. For instance, the one or more components of the input tensor of the device 101 may correspond to one or more parts of the to-be-processed data received from the computing system 100 and the one or more components of the output tensor returned by the device 101 to the computing system 100 may correspond to required output result of the global computational task. Accordingly, the operation graph of the device 101 may be a global operation graph of the global computational task.

In another embodiment, the one or more computational operations associated with the device 101 corresponds to a respective subtask of the global computational task. The one or more components of the input tensor of the device 101 may correspond to one or more components of a respective input tensor of the subtask, the one or more components of the output tensor to one or more components of a respective output tensor of the subtask and the operation graph of the device 101 to a subgraph of a global operation graph of the global computational task.

In some embodiments, various strategies may be applied to process the operations of the operation graph of device 101. For instance, a breadth-first search (BFS), a depth-first search (DFS) strategy, or a hybrid approach, which may include a combination of BFS and DFS for levels or according to thresholds, may be used to iterate through the operations and levels of the operation graph. The choice of the strategy may globally depend on the nature of the one or more computational operations associated with the device 101, i.e., on the nature of the task(s) associated with the device 101, and/or the configuration of the device 101.

In some embodiments, an operation of the operation graph may globally require to have enough input data to execute. For instance, each operation of the graph uses one or more components of a first tensor to calculate a component of a second tensor. However, depending on the way how the operation graph is traversed, it may happen that a component resulting from a first operation be earlier available and stored than another component resulting from a second operation. If a third operation uses the components resulting from both first and second operations, it may need to stall or wait that the second operation be completed until it can execute. For instance, operation 3 of the operation graph of Fig. 2 may need that a resulting component of both operations 1 and 2 be provided and stored in T2 to execute. If the result component of operation 2 is not yet available, operation 3 may not be able to execute. This may negatively impact the execution speed and the memory consumption. Accordingly, the strategy used to traverse the operation graph is of upmost importance to efficiently process a received component of the input tensor and obtain the corresponding component of the output tensor quickly and with low resource consumption.

Moreover, in some embodiments, the input tensor, the intermediate tensors T1 to T4, and the output tensor, or at least some of them, may correspond to three-dimensional tensors having a horizontal dimension, a vertical dimension, and a depth dimension. Some of the operations of the operation graph may only provide resulting components over a limited dimension. For instance, taking the example of Fig. 2, one can imagine that operation 3 provide a first component of T3 only along a first depth range and that operation 4 a second component of T3 over a second depth range. In an embodiment, a global condition for at least some of the operations of the graph to execute may be that there are enough data in their tensor used as input for them to execute. In some embodiments, it may involve verifying whether the data of the one or more components of the tensor used as input provide data in full depth. This may be because the operations may be configured to always operate in full depth and to e.g. operate only over limited ranges in vertical and horizontal directions.

For instance, in some embodiments, and e.g. when at least some of the operations relate to CNN, the one or more operations of the operation graph may be kernel operations, e.g. filter kernel operations, having each a respective kernel with a respective kernel size. A kernel may be referred to as a filter kernel or simply a filter. Typically, a kernel is a matrix (typically 3x3, 5x5, 7x7, or any particular size) of weights that is applied to a tensor, or a component of the tensor, preferably through a convolution operation. This may include sliding the kernel over the tensor, preferably taking an element-wise product of overlapping entries of the component of the tensor and respective entries in the kernel, and then summing them to produce a single output value.

In some embodiments, a filter kernel operation in the operations of the operation graph can be implemented as a planewise operation. For instance, it may be configured such its kernel/matrix (e.g. 3x3, 5x5 etc) is arranged in along two dimensions (e.g. in vertical and horizontal directions) but is yet applied in full extent in a third dimension (e.g. the depth dimension) to a component of a tensor (used as input). For instance, the matrix may be arranged in vertical and horizontal directions but be applied in full depth to the component of the tensor. If however, the component of the tensor is yet not available in full extent in the third dimension (e.g. in full depth), the filter kernel operation may be hindered to execute. Hence, in some embodiment, the global condition for at least some of the operations of the graph to execute may specifically include at least the specific execution condition that, for an operation being a filter kernel operation having a kernel arranged in limited ranges in two dimensions but being applied in full extent in a third dimension, the tensor used as input by the operation should be provided with data in full extent in the third dimension in the tensor. For instance, it may mean that, for a given operation of the operation graph, the tensor used as input by the given operation should be provided with data arranged in full depth. In a particular example, the specific execution condition may be that, for a given operation of the operation graph, the component of the tensor used as input by the given operation should be provided with data arranged in full depth for the given operation to execute.

Hence, in some embodiments, fulfilling this specific execution condition may be sufficient to determine that an operation can execute on one or more components of a tensor used as input. For instance, it means that the specific execution condition may be considered fulfilled if it is determined that the one or more components of the tensor provide data in full extent in the third dimension (e.g. in full depth) In that case, it may mean that the operation is provided with enough data to execute using the one or more components of the tensor and calculate a resulting component to be stored in another tensor of the graph. Conversely, if the specific execution condition is not fulfilled, it may be (e.g. directly) determined that the operation is not provided with enough data to execute and calculate a resulting component to be stored in another tensor of the graph.

As explained above, providing multiple devices on a computing system, including the device 101, wherein each device is dedicated to compute a respective subtask of a global computational task, may primarily help to compute the global computational task efficiently and quickly. However, the way of traversing an operation graph may deeply impact the processing speed and the memory usage, especially if the available resources are limited. An optimized way of processing tensors is needed to reduce computational resource consumption, especially for devices with limited form factor or silicon area, such as in portable or on-board platforms scenarios.

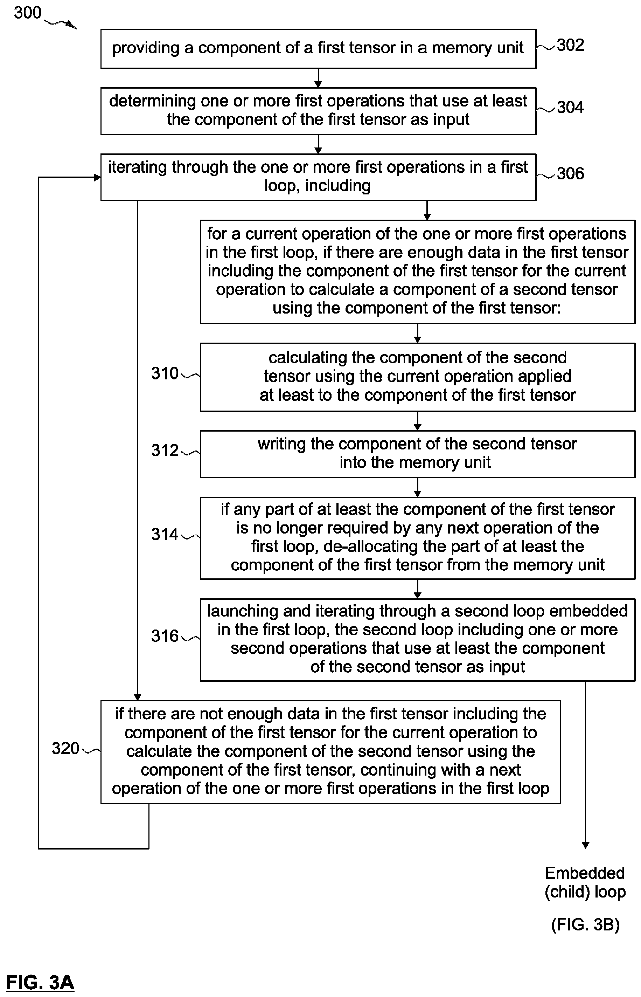

Fig. 3A discloses a flow diagram of a method, which addresses this issue. The method 300 may be applicable at any level (e.g. loop) of an operation graph, e.g such as the operation graph of Fig. 2 or the operation graph of the one or more computational operations associated with the device 101.

Method 300 may begin with step 302, wherein a component of a first tensor is provided in a memory unit. For instance, taking above exemplary device 101, this step may correspond to providing the component of the first tensor in the local memory unit of the device 101. The first tensor may be, e.g., the input tensor of the device 101. In that case, providing the component of the first tensor in the memory unit may comprise receiving the component of the first tensor from an external memory (e.g., system memory of computing system 100) and storing the component of the first tensor in the local memory unit of the device 101. Alternatively, the first tensor may be any intermediate tensor according to an operation graph. For example, the first tensor may be any intermediate tensor of the operation graph of the one or more computational operations associated with the device 101 (see, e.g., any of T1 to T4 of Fig. 2).

Processing of the method 300 may continue with step 304 comprising determining one or more first operations that use at least the component of the first tensor as input. For instance, in the above example of device 101, the component of the first tensor may be subject to serve as input for one or more first operations. For instance, in the operation graph of Fig. 2, and taking the example of a given component of intermediate tensor T2, one or more first operations that use at least the given component of T2 as input may be determined (for instance, operation 3, operation 4 and operation 5).

The method 300 may continue with iterating through the one or more first operations in a first loop (step 306), i.e. through the one or more operations determined in step 304. For instance, taking the above illustrative example based on T2 of Fig. 2, the first loop may comprise operation 3, operation 4 and operation 5, i.e. loop C of Fig. 2.

The iteration through the first loop may start with a first operation and proceed with subsequent operations until reaching the last operation in the loop. Each iteration may be associated with a current operation, which may be the first, any subsequent, and the last operation in the loop. For a current operation of the one or more first operations in the first loop, if there are enough data in the first tensor including the component of the first tensor for the current operation to calculate a component of a second tensor using the component of the first tensor, the method 300 may perform the following steps:
- step 310: calculating the component of the second tensor using the current operation applied at least to the component of the first tensor,
- step 312: writing the component of the second tensor into the memory unit,
- step 314: if any part of at least the component of the first tensor is no longer required by any next operation of the first loop, de-allocating the part of at least the component of the first tensor from the memory unit, and
- step 316: launching and iterating through a second loop embedded in the first loop, the second loop including one or more second operations that use at least the component of the second tensor as input.

However, if there are not enough data in the first tensor including the component of the first tensor for the current operation to calculate a component of a second tensor using the component of the first tensor, the method 300 may continue with a next operation of the one or more first operations in the first loop (step 320).

For instance, the current operation may be any operation of the first loop that is currently processed after the one or more operations preceding the current operation in the first loop have been processed. For instance, taking again the above illustrative example based on T2 of Fig. 2, iterating through the one or more first operations in a first loop (step 306) may start with operation 3 of loop C in Fig. 2. For instance, it may be determined whether there are enough data in T2 including the given component of T2 for operation 3 to calculate a component of a second tensor (i.e. a component of intermediate tensor T3 in Fig. 2) using the given component of T2. For instance, consider the case that operation 1 has provided the given component of T2 but that operation 2 has still not been processed. It may be the case that the given component of T2 provides itself indeed enough data for operation 3 to execute and/or generate the at least one component of T3. However, operation 3 may alternatively require the provision of a resulting component from operation 2 in T2 to execute. Therefore, in an embodiment, the execution of an operation using at least a component of a first tensor as input may globally be conditioned on whether there are enough data in the first tensor including the component of the first tensor for the operation to calculate a component of a second tensor using the component of the first tensor.

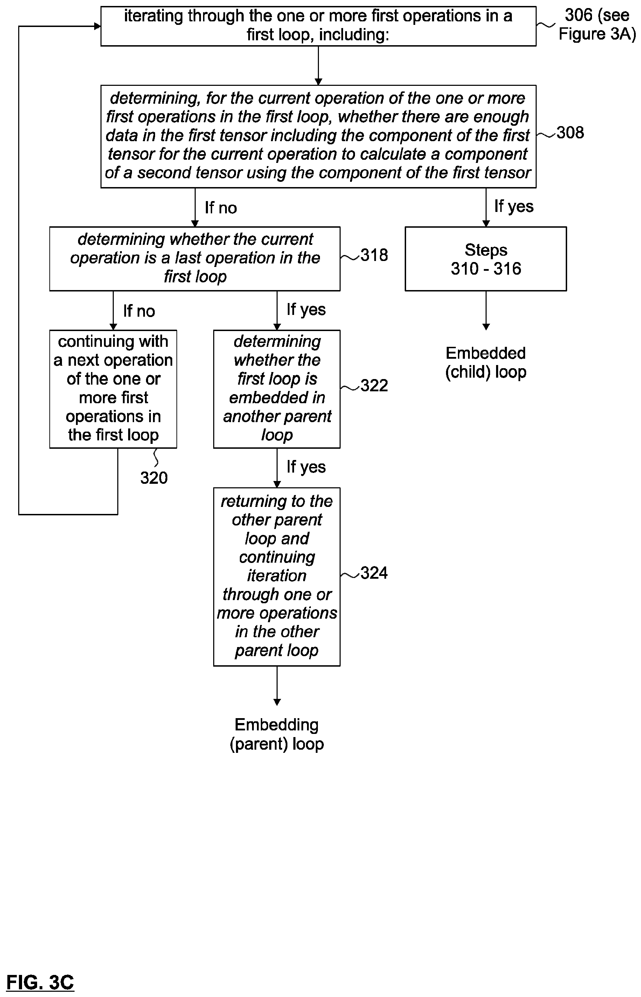

In a preferred embodiment, step 306 may include a determination, for the current operation of the one or more first operations in the first loop, whether there are enough data in the first tensor including the component of the first tensor for the current operation to calculate a component of a second tensor using the component of the first tensor (see step 308 of Fig. 3C). Accordingly, in an embodiment, when it is determined that there are enough data in the first tensor including the component of the first tensor for the current operation to calculate a component of a second tensor using the component of the first tensor, the method 300 may proceed with steps 310 to 316 of Fig. 3A. However, when it is determined that there are not enough data in the first tensor including the component of the first tensor for the current operation to calculate a component of a second tensor using the component of the first tensor, the method 300 may proceed with step 320 of Fig. 3A.

According to an embodiment, the mere provision of the component of the first tensor may not suffice as such for the current operation to execute. This may be because that the current operation may need the result of two parent operations in the first tensor to execute. In some embodiments, and taking the example of Fig. 2, operation 3 may be an operation that can execute already based on the given component of T2 generated by operation 1 whereas operation 4 may be an operation that additionally needs the resulting component of operation 2 in T2 to execute based on the given component of T2 generated by operation 1 and the resulting component of operation 2 in T2.

In embodiments, some tensors associated with the one or more computational operations performed by the device 101 may be three-dimensional tensors having a horizontal dimension, a vertical dimension and a depth dimension. In an embodiment, said determining 308 may comprise determining whether a specific execution condition is met, as explained above. For instance, if the first tensor is a three-dimensional tensor having a horizontal dimension, a vertical dimension and a depth dimension and the current operation is a filter kernel operation having a kernel arranged in limited ranges in two dimensions but being applied in full extent in a third dimension, the step 308 may comprise determining whether the available data in the first tensor on which the current operation is to execute are arranged in full extent in the third dimension. In addition or as an alternative, if the first tensor is a three-dimensional tensor having a horizontal dimension, a vertical dimension, the step 308 may comprise determining whether the available data in the first tensor on which the current operation is to execute are arranged in full depth.

In an embodiment, if the available data in the first tensor on which the current operation is to execute are arranged in full extent in the third dimension or in full depth, it may mean that there are enough data in the first tensor including the component of the first tensor for the current operation to calculate a component of a second tensor using the component of the first tensor. In contrast, in addition or as an alternative, if it is determined that the available data in the first tensor on which the current operation is to execute are not arranged in full extent in the third dimension or in full depth, it may mean that there are not enough data in the first tensor including the component of the first tensor for the current operation to calculate a component of a second tensor using the component of the first tensor. For instance, in the example of Fig. 2, the resulting component of operation 3 in T3 may not be sufficient for operation 6 to execute. It may be the case that this component of T3 only covers a limited range in the third dimension (e.g. in depth) and that operation 4 is to provide another component of T3 that completes this component of T3 so that these both components in T3 provide together data arranged in full extent in the third dimension (e.g. in full depth). If this condition is fulfilled, operation 6 will have enough data in T3 to execute to calculate a component of T4.

In an embodiment, determining 308 may include determining whether the component of the first tensor is arranged in full extent in the depth dimension. If this is the case, it may be determined that there are enough data in the first tensor including the component of the first tensor for the current operation to calculate a component of a second tensor using the component of the first tensor. In that case, it is determined that the component of the first tensor is sufficient for the current operation to calculate the component of the second tensor.

If there are not enough data in the first tensor including the component of the first tensor for the current operation to calculate the component of the second tensor using the component of the first tensor, the method 300 proceeds with step 320, i.e. with continuing with a next operation of the one or more first operations in the first loop (see left branch of Fig. 3A). In an example, in that case, the method 300 may stop processing the current operation, which will be tried again at a later point in time when enough input data is present that enable completion of the current operation, and may continue with the next operation in the first loop. In the illustrative example of Fig. 2, it would mean e.g. stopping processing the current operation 3 and continuing with operation 4 of loop C. Accordingly, step 320 enacts a tentative execution of any further operation of the first loop, which may already have enough data in the first tensor (including the component of the first tensor) to execute.

If there are enough data in the first tensor including the component of the first tensor for the current operation to calculate a component of a second tensor using the component of the first tensor (e.g. when, for operation 3, the given component of T2 is e.g. indeed sufficient for operation 3 to calculate the at least one component of T3 in the above illustrative example), the method 300 proceeds with calculating 310 the component of the second tensor using the current operation applied at least to the component of the first tensor, and writing 312 the component of the second tensor into the memory unit (see the right branch of Fig. 3A).

In some embodiments, if there are enough data in the first tensor including the component of the first tensor for the current operation to calculate a component of a second tensor using the component of the first tensor, the method 300 may include marking the current operation as processed. It may take place e.g. after or, alternatively, before step 310 in Fig. 3A. Accordingly, if not all operations of the first loop have been processed during a first iteration through the first loop, a second iteration through the first loop may take place later still based on the component of the first tensor, wherein the operations of the first loop that have been marked as processed during the first iteration are skipped and any operation not processed during the first iteration is tried again (e.g. according to step 306 of method 300). For instance, using the illustrative example of Fig. 2, if, in a first iteration through loop C, operation 3 could execute based on the given component of T2 but operations 4 and 5 could not execute, operation 3 will be skipped in a second iteration through loop C since it is marked as processed.

In an embodiment, marking the current operation as processed may comprise removing the current operation from a list of to-be-processed operations. For instance, the operation graph of the device 101 may be associated with a list of to-be-processed operations. In an embodiment, the marking may correspond to a removal of the current operation from the list. Accordingly, in some embodiments, a verification that any operation of the one or more computational operations performed by the device 101 has been processed may correspond to a verification that the any operation is absent from the list of to-be-processed operations.

In some embodiments, to save memory space in the memory unit of the device 101, the allocation of memory space for one or more tensors, and especially of one or more components thereof, may depend on whether said one or more tensors, or the one or more components thereof, are to be calculated. Hence, in some embodiments, step 310 may be preceded by a step of allocating memory space for the component of the second tensor in the memory unit. For instance, it may allocate memory space from a start address applied by a command. Further, in some embodiments, once the component of the second tensor is calculated using the current operation, step 312 may include writing the component of the second tensor into the allocated memory space of the memory unit. Hence, accordingly, memory space usage of the memory unit of the device 101 is actively controlled and managed.

Further, in some embodiments, if any part of at least the component of the first tensor is no longer required by any next operation of the first loop, the method 300 may proceed with de-allocating 314 the part of at least the component of the first tensor from the memory unit. This may involve deleting the part of at least the component of the first tensor from the memory unit to free memory space. It may also involve releasing memory space associated with the part to e.g. let it be overwritten by next write operations. Step 314 may comprise determining whether any part of at least the component of the first tensor is no longer required by any next operation of the first loop. For instance, it may comprise determining any part of the component of the first tensor that is no longer required by any next operation of the first loop. For instance, in the illustrative example of T2 of Fig. 2, it may be determined which part of the given component of T2 is still required by operation 4 and operation 5 of loop C and/or which part of the given component of T2 is no longer needed. This latter part is a part that is to be de-allocated. In some embodiments, the de-allocation may include no erasing operation. It may include simply a release of the part for further use. Additionally or as an alternative, it may comprise determining data item(s) in the first tensor that are required by none of the next operations of the first loop. For instance, it may comprise identifying, for each next operation of the first loop which data of the first tensor stored in the memory unit is still required. If any data item(s) of the first tensor is required by none of the next operations of the first loop, the data item(s) may correspond to the part that is to be de-allocated.

Additionally or as an alternative, in some embodiments where any next operation of the first loop involves at least one kernel operation, the determining whether any part of at least the component of the first tensor is no longer required by any next operation of the first loop may be performed based on the size of the at least one kernel operation. As explained above, at least some of the operations of the operation graph may be filter kernel operations and may have kernels having limited dimensions along two dimensions and full extent in the third dimension. The limited dimensions may be the kernel sizes (e.g. 3x3, 5x5, 7x7, or any particular size). Applying a filter kernel may involve sliding the kernel over the tensor, preferably taking an element-wise product of overlapping entries of the component of the tensor and respective entries in the kernel, and then summing them to produce a single output value. Accordingly, in an embodiment, the determination whether any part of at least the component of the first tensor is no longer required by any next operation of the first loop may be based on a maximum kernel size of kernels of next operations in the first loop. In a preferred embodiment, calculating the maximum kernel size may include taking a maximum of a horizontal and/or vertical size of each kernel of each next operation of the first loop.

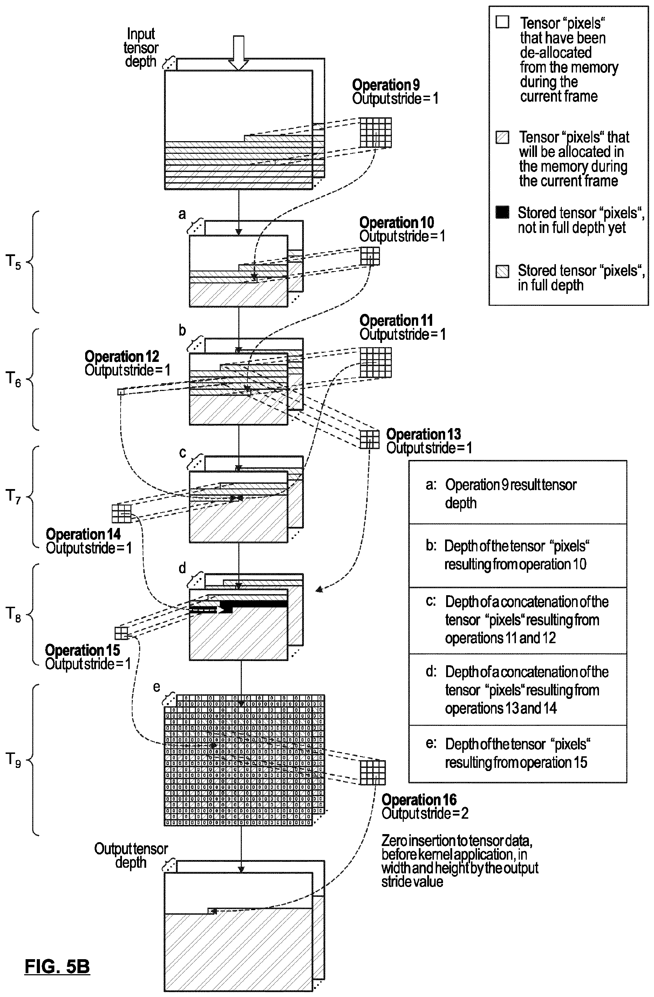

Accordingly, during processing of the one or more computational operations associated with the device 101 for a given component of the input tensor, the memory unit is managed to keep only the components of the intermediate tensors, or any parts thereof, that are still required to calculate corresponding one or more components of the output tensor of the device 101. This is illustrated in Fig. 5B (see below). As a result, the memory usage of the memory unit is dynamically adapted to instantaneous storage needs of the tensor calculation. The storage space consumption is actively reduced and optimized during computation, thereby avoiding memory congestions or drops of data throughput of the device 101.

Returning to Fig. 3A, after step 314, the method 300 may proceed with step 316 comprising launching and iterating through a second loop embedded in the first loop, wherein the second loop includes one or more second operations that use at least the one component of the second tensor as input. Accordingly, this step tries to execute, at an early stage and based on the freshly obtained result of the current operation of the first loop, any operation of the one or more computational operations that uses the component of the second tensor as input. In some embodiments, this strategy may be in accordance with a depth-first search (DFS) strategy followed by the device 101 to traverse the operation graph. For instance, in the illustrative example of Fig. 2, after the execution of steps 310 - 314 with the current operation 3, step 316 may include launching and iterating through loop D, wherein loop D includes operations 6 and 7 that use at least the component of T3 obtained from operation 3 as input. Accordingly, the second loop including the one or more second operations corresponds to a (sub-)loop embedded in the first loop. In the illustrative example of Fig. 2, it means that loop D is embedded in loop C. In some embodiments, step 316 may correspond to a recursive iteration of step 306. Hence, step 316 may include the same sub-steps of step 306 (e.g. steps 310 - 316 or 320 of Fig. 3A), however based on a subsequent loop of operations (e.g. loop D in Fig. 2). In this regard, the first loop (e.g. loop C) may be regarded as a parent or embedding loop for the second loop (e.g. loop D). Conversely, the second loop (e.g. loop D) may be regarded as a child or embedded loop for the first loop (e.g. loop C).

Accordingly, the method 300 may not directly proceed with the execution of any next operation of the first loop but instead with the execution of a second loop embedded in the first loop before continuing with any next operation of the first loop. This has the advantage of starting at an early stage the execution of loops embedded according to the operation graph. This strategy quickly spreads the amount of processing work over all levels of the operation graph and avoids a congestion of processing means dedicated for the first levels of the operation graph at the beginning of the one or more computational operations performed by the device 101. In addition, by trying to process, at an early stage, operations of lower levels of the operation graph, memory space associated with the component(s) of the tensor(s) serving as input to these operations can be already de-allocated and released for other operations thereby improving the overall execution of the one or more computational operations performed by the device 101 in terms of resource consumption and throughput.

In embodiments, the method 300 as shown in Fig. 3A processes operation(s) according to a depth-first search (DFS) strategy. However, the disclosure of the present application is not limited to the application of such a strategy and other kinds of operation graph traversal strategies are also contemplated. For instance, the method 300 may alternatively apply a breadth-first search (BFS) strategy. In such a case, step 316 may be removed and completion of step 314 may direct instead to step 320 modified to continue with a next operation of the one or more first operations in the first loop either if there are not enough data in the first tensor including the component of the first tensor for the current operation to calculate the component of the second tensor using the component of the first tensor or after completion of step 314. According to such a strategy, the first loop may be reiterated until each first operation of the first loop is completed to then trigger the processing of the next (child) loop in the operation graph.

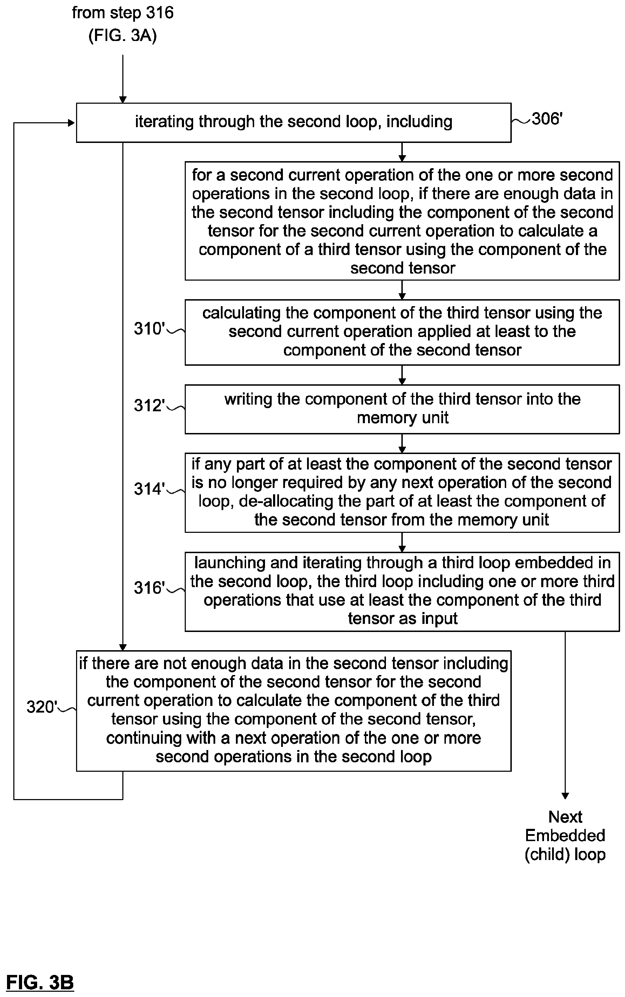

Fig. 3B illustrates one or more steps included in and/or subsequent to step 316. It illustrates the recursive nature of method 300 according to embodiments following a depth-first search (DFS) strategy (such as Fig. 3A). For instance, launching and iterating through the second loop embedded in the first loop (step 316) may include iterating through the second loop (step 306'), e.g. iterating through the one or more second operations that use the component of the second tensor as input. Similar to the iteration in the first loop, it may involve taking subsequently each operation of the second loop as a second current operation and performing the one or more steps of Fig. 3B with the second current operation of the second loop.

In an embodiment, for a second current operation of the one or more second operations in the second loop, if there are enough data in the second tensor including the component of the second tensor for the second current operation to calculate a component of a third tensor using the component of the second tensor, the method 300 may perform the following steps:
- step 310': calculating the component of the third tensor using the second current operation applied at least to the component of the second tensor,
- step 312': writing the component of the third tensor into the memory unit,
- step 314': if any part of at least the component of the second tensor is no longer required by any next operation of the second loop, de-allocating the part of at least the component of the second tensor from the memory unit, and
- step 316': launching and iterating through a third loop embedded in the second loop, the third loop including one or more third operations that use at least the component of the third tensor as input; and

In contrast, if there are not enough data in the second tensor including the component of the second tensor for the second current operation to calculate the component of the third tensor using the component of the second tensor, iteration 306' may continue with a next operation of the one or more second operations in the second loop, which then represents the next current operation of the second loop (step 320').

In an embodiment, steps 310' - 316' and 320' substantially correspond to steps 310 - 316 and 320, with the difference that they regard a child loop. Hence, the implementations details and embodiments described above with steps 310 - 316 and 320 may also apply to steps 310' - 316' and 320'.

Fig. 3C illustrates further aspects of method 300 according to some embodiments, and in particular, details about transitions between operations of different loops. In an embodiment, the method 300 may further include, if the current operation of the first loop is a last operation in the first loop, determining whether the first loop is embedded in another parent loop, and if the first loop is embedded in the other parent loop, returning to the other parent loop and continuing iteration through one or more operations in the other parent loop. Accordingly, when all operations of a given loop have been all iterated through, the method may return to a parent loop to continue iteration in said parent loop, if necessary. This may be needed e.g. to complete all the remaining operations of the parent loop to provide all components needed for all operations of the first loop to execute. This also enables to return to the top / root loop of the operation graph when all operations of the operation graph have been traversed or executed.

For instance, as shown in Fig. 3C, the method 300 may particularly include, after step 306, determining 308, for the current operation of the one or more first operations in the first loop, whether there are enough data in the first tensor including the component of the first tensor for the current operation to calculate a component of a second tensor using the component of the first tensor. If there are enough data in the first tensor including the component of the first tensor for the current operation to calculate a component of a second tensor using the component of the first tensor, the method may proceed with steps 310 - 316 of Fig. 3A as discussed above. However, in the opposite case, the method 300 may first proceed with determining 318 whether the current operation is a last operation in the first loop. If it is determined that the current operation is not the last operation in the first loop, the method may proceed with step 320, i.e. continuing with a next operation of the one or more first operations in the first loop, as discussed above with Fig. 3A. However, it if determined that the current operation is the last operation in the first loop, the method may proceed instead with determining 322 whether the first loop is embedded in another parent loop. If it is determined that the first loop is embedded in the other parent loop, the method may proceed with returning 324 to the other parent loop and continuing iteration through one or more operations in the other parent loop.

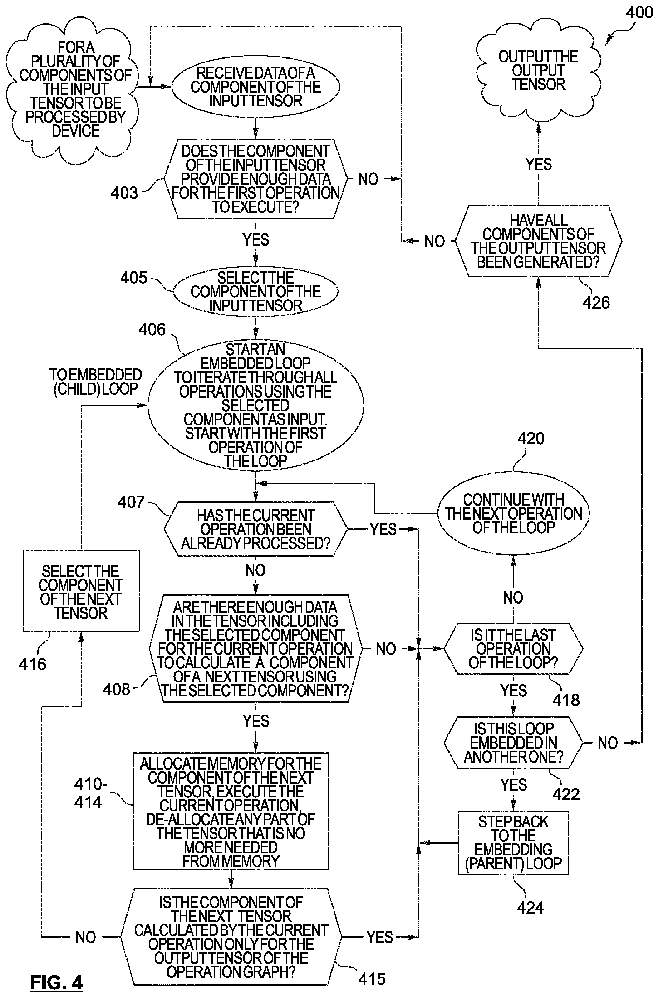

In some embodiments, continuing iteration through the one or more operations in the other parent loop may itself comprise performing steps 318, 320, 322 and/or 324 for the other parent loop. It means that, in a particularly preferred embodiment, before continuing with a next operation in the other parent loop, the method may execute step 318 in the other parent loop and proceed with step 320 or steps 322, 324 depending on the result of the determination of step 318. For instance, it may be first determined whether the current operation in the other parent loop is the last operation of the other parent loop (step 318 for the other parent loop). If it is not the case, then, the method proceeds with continuing with the next operation of the other parent loop (step 320 of the other parent loop). However, if the current operation in the other parent loop is indeed the last operation of the other parent loop, the method may proceed with further stepping back in the operation graph. For instance, it may be then determined whether the other parent loop is itself embedded in another higher loop in the operation graph (step 322 for the other parent loop). If this is the case, the method may return to said other higher loop in the operation graph and continue iteration through one or more operations in said other higher loop in the operation graph (step 324 of the other parent loop). Further details of the transitions between loops are explained below with Fig. 4.

In a preferred embodiment, the method 300 is applicable to whatever component of any tensor once provided in the memory unit. Additionally, it should be noted that the further aspects of method 300 shown in Fig. 3C with regard to the current operation of the first loop are also applicable to any level of the operation graph. For instance, they may be likewise applied to the iterating 306' through the second loop, as shown in Fig. 3B, considering the component of the second tensor (used as input), the second current operation of the second loop and the component of the third tensor (as output) in place of the component of the first tensor (used as input), the current operation of the first loop and the component of the second tensor (as output) in Fig. 3C.

A following exemplary traversal according to method 300 is provided. For instance, taking the above illustrative example of Fig. 2, consider the case where the given component of T2 used as input by operation 3, operation 4 and operation 5 of loop C (i.e. the first loop), was generated by operation 1 of loop B. Further consider that for instance operation 2 has still not been processed and that operation 3 could be processed because the given component of T2 provides itself enough data in the first tensor for operation 3 to calculate a component of T3 (see steps 302 - 312 of Fig. 3A). After execution of step 314, iteration through loop D (i.e. the second loop) is launched, wherein loop D is embedded in loop C and includes operations 6 and 7 that use at least the component of T3 (step 316, step 306' of Fig. 3B). In loop D, it may be determined whether there are enough data in T3 including the component of T3 for operation 6 to calculate a component of T4 using the component of T3 (step 308 in the second loop, i.e. loop D). However, imagine that it is not the case, then the method further iterates through loop D (steps 320, 306). Specifically, it may first determine whether operation 6 is the last operation of loop D (step 318 of Fig. 3C applied to the second loop, i.e. loop D), and since it is not the case, it proceeds with the next operation of loop D, i.e. operation 7 (step 320 of Fig. 3C applied to loop D). Imagine that there are also not enough data in T3 including the component of T3 for operation 7 to calculate a component of T4 using the component of T3. The method then further iterates through loop D (steps 320, 306). However, specifically, since operation 7 is now the last operation of loop D (step 318 of Fig. 3C applied to loop D, case "yes"), determination can be made whether loop D is embedded in another loop (step 322 of Fig. 3C applied to loop D). Since it is embedded in loop C, the method returns to loop C and continues iteration through loop C (step 324 of Fig. 3C applied to loop D). The current operation of loop C is still operation 3. It is not the last operation of loop C (step 318, case "no") so it is continued with operation 4 taken as current operation of loop C (step 306 of Figs. 3A, 3C). However, imagine that there are not enough data in T2 including the given component of T2 for operation 4 to calculate a component of T3 using the given component of T2 (step 308 of Fig. 3C, case "No"). It is then determined whether operation 4 is the last operation of loop C (step 318 of Fig. 3C). Since operation 4 is not the last operation of loop C, the method proceeds with iteration through loop C (step 320) and chooses operation 5 as the current operation of loop C (step 306). Again, imagine that there are not enough data in T2 including the given component of T2 for operation 5 to calculate a component of T3 using the given component of T2 (steps 308 of Fig. 3C, case "No"). It is then determined whether operation 5 is the last operation of loop C (step 318 of Fig. 3C). Since operation 5 is the last operation of loop C (step 318, case "yes"), the method returns to the parent loop B and continues iteration therein, i.e. with operation 2 of loop B.

In that case, operation 2 will be then executed and provide all the components of T2 that were missing for operations 4 and 5 to execute. After successful execution of operation 2 (steps 308 - 314 of Fig. 3A applied to the parent loop, i.e. loop B), the method will proceed again with launching and iterating through the first loop (i.e. loop C) but will skip operation 3 as it already executed in the previous iteration of loop C (e.g. it is marked as processed, as explained above). In that case, operation 4 will be executed (steps 306, 310 - 314 of Fig. 3A, 3C) followed by a new iteration of loop D.

According to a further aspect of the disclosure, Fig. 4 provides a flow chart summarizing the processing of a plurality of components of an input tensor. The method 400 illustrated in Fig. 4 particularly relates to a method for processing a component of the input tensor of e.g. a plurality of components of the input tensor according to one or more computational operations associated with the device 101 for the component of the input tensor. The method 400 is particularly configured to traverse an operation graph, such as the one of Fig. 2.

In an embodiment, the operation graph traversed by the method 400 may correspond to an operation graph associated with a certain subtask of a global computational task, such as the global computational task defined above with Fig. 1A or 2. Alternatively, it may correspond to the global operation graph of the global computational task. For instance, it may comprise all operations of the global computational task to perform on to-be-processed data provided by the computing system 100.

In an embodiment, the method 400 is preferably performed by a device, such as device 101 discussed above. For instance, the method 400 may be applied to a device 101 to process an operation graph associated with the device 101, e.g. an operation graph associated with a certain subtask of a global computational task. However, the method 400 may also be performed by any kind of data processing system having one or more processors and one or more memories, and/or involving local and or remote computational resources. It can also be performed by a plurality of devices, such as a plurality of devices 101 associated with e.g. the computing system 100. In such a case, the plurality of devices 101 may be configured to collaboratively process a same operation graph associated with respective computational operations. The plurality of devices 101 may be configured to collaboratively perform the method 400, to e.g. process the global operation graph of the global computational task explained above. For instance, one or more first devices of the plurality of devices 101 can be configured to compute a first group of operations of the operation graph and one or more second devices of the plurality of devices 101 a second group of operations of the operation graph. The first group and the second group can belong to a same loop of the operation graph or to different loops (e.g. successive loops) of the operation graph.

The method 400 begins with receiving 401 data of a component of the input tensor. In step 403, it may be determined whether the component of the input tensor provides enough data for a first operation of an operation graph to execute. The first operation may be the first operation in the top / root loop of the operation graph. Similar to step 308, in an embodiment where the tensors processed by the operation graph are three-dimensional tensors having a horizontal dimension, a vertical dimension and a depth dimension and where at least the first operation of the operation graph is a filter kernel operation having a kernel arranged in limited ranges in two dimensions but being applied in full extent in a third dimension, step 403 may comprise determining whether the component of the input tensor is arranged in full extent in the third dimension. For instance, it may comprise determining whether the component of the input tensor is arranged in full extent in the depth dimension, e.g. if it has arrived in full depth in the input tensor.

If this condition of step 403 is not met, the method loops back as shown in Fig. 4. If it is met, the component of the input tensor is selected 405 for iterating through the first loop of the operation graph (e.g. loop A of Fig. 2).

In an embodiment, the method 400 relates to method 300 applied to each level/loop of an operation graph. For instance, it may involve repeating the method 300 for iterating through different loops of the operation graph. In some embodiments, steps 406, 408, 410 - 414, 416, 418, 420, 422, and 424 of method 400 shown in Fig. 4 basically correspond respectively to steps 306, 308, 310 - 314, 316, 318, 320, 322 and 324 of the method 300 discussed above with Fig. 3A - C. For instance, steps 406 - 424 may be implemented according to steps 306 - 324 of the method 300. In an example, the component of the input tensor selected in step 405 may correspond to the component of the first tensor provided in step 302 of the method 300. For instance, a repetition of steps 406 - 416 to iterate through an embedded (child) loop of the operation graph may be implemented in accordance with e.g. steps 306' - 316' of Fig. 3B. In another example, the component of the next tensor selected in step 416 used to iterate through an embedded loop restarting from 406 may correspond to the component of the second tensor used to iterate through the second loop embedded in the first loop according to steps 316 and 306' of Fig. 3A, B. Hence, further explanations of these steps are omitted. Moreover, any detail or feature explained above with the method 300 is also applicable to the method 400. Conversely, any additional step or detail of method 400 presented herein may also be applied to method 300 presented earlier.

In particular, the method 400 may comprise step 407 to determine whether the current operation of the loop has already been processed, e.g. during an earlier iteration of the loop. If yes, the method 400 proceeds with step 418 to verify whether the current operation is the last one of the loop. If not, the method continues 420 with the next operation of the loop.

The method 400 may also comprise step 415, which may be executed after step 414 but before step 416. This step determines whether the component of the next tensor calculated by the current operation (e.g. the component of the second tensor calculated using the current operation applied to the component of the first tensor according to step 310 of the method 300) is only for the output tensor of the operation graph. If no, it means that the loop that is currently iterated is not the last loop of the operation graph and the method may continue with step 416 to iterate through an embedded loop starting again from step 406. If yes, it means that the loop that is currently iterated is the last loop of the operation graph (e.g. loop E in Fig. 2) and that the component of the next tensor is a component written in the output tensor of the operation graph. In that case, the method proceeds with step 418 to verify whether the current operation is the last one of the loop. If not, the method continues 420 with the next operation of the loop. Otherwise, if the current operation is indeed the last operation of the loop, the method proceeds with step 422 to determine whether the loop is embedded in another loop. If the operation graph comprises a plurality of loops, this will be the case as the loop is the last loop of the operation graph. Accordingly, the method proceeds with step 424 to step back to the embedding (parent) loop and may continue therein with the current operation of said embedding (parent) loop. It may then proceed with step 418 to determine whether the current operation of said embedding (parent) loop is the last operation of said loop. Put differently, the method 400 thereby returns to the parent loop(s) to execute any associated potential remaining operation(s).

In an embodiment, if all operations of the operation graph have been performed, the method 400 may accordingly repeat one or more times steps 418, 422 and 424 to finally return to the top loop of the operation graph (e.g. loop A in Fig. 2). In that case, if the current operation of the top loop of the operation graph is the last operation of the top loop (step 418, case "yes"), the method may proceed with step 422. However, in that case, since the top loop is not embedded in any other loop (step 422, case "no"), the method 400 has successfully processed the component of the input tensor and written corresponding one or more components in the output tensor. In an embodiment, the method 400 may end at this stage. Alternatively, the method may proceed with step 426 to verify whether all components of the output tensor have been generated. If not, the method 400 may be repeated with a next component of the input tensor. If yes, it means that the output tensor has been fully calculated and can be returned to the computing system 100.

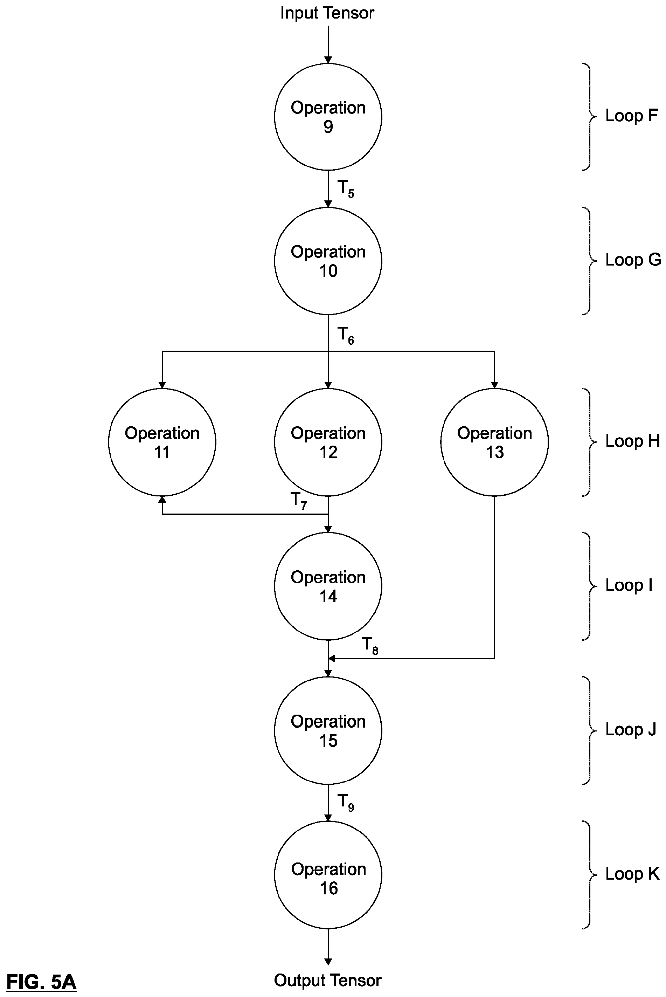

Fig. 5A and 5B illustrate another example of processing of an input tensor using multiple operations in order to generate an output tensor, according to one or more embodiments of the disclosure. Fig. 5A shows another example of operation graph applicable to any device (e.g. device 101) or any plurality of devices (e.g. a plurality of devices 101) as explained above. Fig. 5B illustrates a memory allocation scheme during the processing of the operation graph for a plurality of components of the input tensor, especially according to the methods 400 or 300 described above. Specifically, it shows a kind of instant view of the memory allocation. Fig. 5B also particularly refer to tensor "pixels" for the data of a component of a tensor. However, this is only for illustration purpose. For instance, tensor "pixels" in the input tensor may correspond to data of rows of e.g. an image frame. However, the memory management scheme shown in Fig. 5B is not limited to this type of component and is equally applicable to various kinds of components of tensor, as explained above.

In an embodiment as shown in Fig. 5B, the tensors of the operation graph (e.g. input tensor, T5 - T9 and output tensor) may be three-dimensional tensors having each a horizontal dimension, a vertical dimension and a depth dimension. In an embodiment, the operations (e.g. operations 9 - 16) may be kernel operations, e.g. filter kernel operations, each associated with a respective filter kernel. Each operation belongs to an associated loop of the operation graph as shown in Fig. 5A (e.g. loops F - K). The processing may reflect the methods 300 and 400 as described with regard to Fig. 3A - 3C and 4. It may reflect a processing of layers in a convolutional neural network.

Fig. 5B illustrates the application of operation(s) implemented as filter kernel(s) to the components of the tensors. For instance, operation 9 may be a convolution with a filter kernel of size 5x5. The filter kernel is moved in horizontal direction, that is along lines of the input tensor to calculate a component of a tensor T5. The filter kernels of the operations may also have respective input stride and output stride. The input stride and output stride parameters can describe how the filter kernel (or a pooling operation) moves over a tensor (e.g. feature map) and affects the size of the tensor that stores the result of the application of the filter kernel at each layer. For instance, the input stride of the filter kernel of operation 9 may be 2 and its output stride may be 1. Fig. 5B specifically mentions exemplary output strides associated with the operations.

In an embodiment, the input stride refers to the number of steps the filter kernel (or pooling window) moves between successive operations when applied to the input tensor. A common choice for the input stride is 1, which means that the kernel moves one step (in both the horizontal and vertical directions) at a time, resulting in an output tensor of similar dimensions to the input tensor. Increasing the input stride value reduces the spatial dimensions of the output tensor, making the subsequent operation faster and less memory-intensive, but potentially losing some fine-grained spatial information.

In an embodiment, the output stride refers to the ratio between the spatial dimensions of the tensor to which the filter kernel is applied and the tensor that stores the result of the application of the filter kernel. It can be used as a measure of how much the spatial resolution has been enlarged after passing through one or more operation layers. For example, an output stride of 8 means that the height and width of the final output tensor are each 8 times larger than those of the input tensor. The role of the output stride is to restore the spatial detail in the output tensor.

In an embodiment, the filter kernel operations of Fig. 5A may also be configured to apply their filter kernels in full extent along a third dimension, e.g. in the depth. Some operations of Fig. 5A may provide data in full extent in the third dimension, such as e.g. operations 9, 10, 15 or 16. However, some of them may provide data only over a limited range in the third dimension so that their resulting component may not suffice as such for an operation of a child loop to execute. As also explained above with Fig. 2 and 3A-C, it may be the case that two operations provide results each having a limited range in third dimension in a tensor but that their results complete themselves to provide data arranged in full extent in the third dimension so that the operation of the child loop can execute. This is particularly illustrated in Fig. 5B with operations 14 and 13 (see below).

In an embodiment, Fig. 5B shows an instant view of the memory usage during the processing of the operation graph. It particularly illustrates the active de-allocation of memory space of a memory unit (of e.g. device 101) discussed above as soon as any component (or part thereof) of any tensor is no more needed to process the operation graph. This enables to quickly free memory space that can be directly used for any other on-going operation. For instance, the area in white at the top of the tensors in Fig. 5B represent component(s) of the tensors that have been de-allocated from the memory unit. In the case of the output tensor, it means that the corresponding components have already been returned to the computing system 100 (e.g. stored in its system memory). The area marked with forward slashes correspond to tensor "pixels" that still need to be allocated in the memory unit, i.e. to be processed. Hence, for all three-dimensional tensors of Fig. 5B, the shown processing according to e.g. method 400 or 300 needs to only store and keep the tensor "pixels" marked with backslashes in the memory unit. These tensor "pixels" represent component(s) of the tensors stored in full extent in the depth dimension in Fig. 5B. Hence, the usage of available computing resources is optimized, and the power consumption is reduced. It may mean that a memory unit of limited size may suffice to process the operation graph.

In an embodiment, in the instant view of Fig. 5B, operations 11 and 12 of loop H have been successfully performed on the component marked with backslashes in T6. Their resulting components are stored in T7 (see tensor "pixels" marked therein with backslashes), for instance as a concatenation of first component resulting from the execution of operation 11 and a second component resulting from the execution of operation 12. These both components cover together the full depth of T7. The current operation in loop H is operation 12. According to methods 300, 400, and particularly steps 316/416, after the operation 12 was successfully executed (steps 310 - 314 / 410 - 414), iteration through the child loop using T7 is launched, i.e. through loop I (step 316 / 416). Its single operation 14 could successfully execute (steps 310 - 314 for operation 14 in loop I) to provide a resulting component stored in T8. However, since operation 13 of loop H has still yet not been executed, the resulting component of operation 13 that should come into T8 according to the operation graph is still not available. The resulting component of operation 14 is marked in black in T8 and is kept in memory unit. It covers only a limited range in depth in T8. Still according to methods 300, 400, and particularly according to steps 316/416 within loop I, the next child loop (e.g. loop J) will be tentatively iterated. However, since the resulting component of operation 14 in T8 is not arranged in full extent in the depth dimension, it means that there are not enough data in T8 including this component for operation 15 of loop J (i.e. the single operation of loop J) to execute. Accordingly, the process branches through steps 318 - 322 - 324 / 418 - 422 - 424 in loop J to return to loop I. Likewise, since operation 14 is the last operation of loop I, the process branches again through steps 318 - 322 - 324 / 418 - 422 - 424 in loop I returns to loop H, where the current operation is operation 12. Since operation 12 is not the last operation of loop H (steps 318 / 418 - case "no"), the process proceeds with step 320 / 420 to process the next operation of the loop H, i.e. operation 13, which will execute (steps 310 - 314 / 410 - 414 for operation 13) and provide the resulting component of operation 13, i.e. the component of T8 that was previously missing for operation 15 to execute. Subsequently, the process will perform step 316 / 416 to launch and iterate through the loop embedded in loop H that includes one or more operations that use the resulting component of operation 13 as input, i.e. loop J. The new iteration through loop J will then successfully execute operation 15 and enables to finish the graph traversal through the remaining operation(s) of operation graph (here operation 16).

As visible in Fig. 5B, the resulting components of operation 11 and operation 12 may be concatenated in T7. Similarly, the resulting components of operations 14 and 13 may be concatenated in T8. In an embodiment, only the concatenation of resulting components enables to provide enough data for a given operation of a next loop to execute using these resulting components. In an embodiment, only the concatenation of said resulting components enable to have enough data arranged in full extent on the depth dimension for the given operation to execute.

While Fig. 5A and B discuss an operation graph comprising seven operations, the present technology is applicable to any operation graph of whatever amount N of operations and/or whatever amount k of loops, N and k being positive integers bigger or equal to one. Moreover, the present technology is particularly suitable for the computations of operations of one or more convolutional neural networks, CNNs.

In some embodiments of the present disclosure, the methods 300 and 400 of Figs. 3A to 3C, and Fig. 4, and the processing related to Fig. 5 may be implemented using the following first pseudo code:

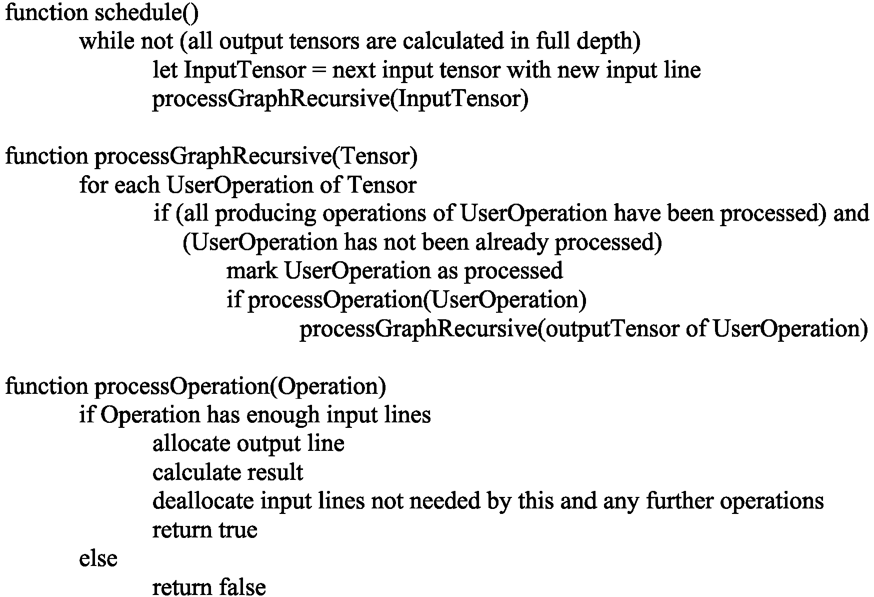

This first pseudo code implements some main aspects of steps 401 - 414 of method 400. In an example, the variable "Tensor" may be regarded as being a first tensor, and specifically a component of the first tensor that is used by each UserOperation, i.e. each operation of a loop of one or more operations that uses the "Tensor" as input.

Additionally, the first pseudo code specifies an additional condition for executing the UserOperation (e.g. the current operation of the iteration through the loop), which is that "all producing operations of UserOperation" should have been processed. In an embodiment, this condition may complete step 308 or 408 described above. For instance, steps 308 / 408 can be preceded by a step of determining whether all operations producing a resulting component in the first tensor have been processed. If not the process may directly go to step 318 / 418. This avoids performing step 308 /408, thereby saving computation effort and resources.

In yet another example implementation using second pseudo code, the operations may be included into an array opsRemaining, which initially includes all operations, such as all operations of an operation graph that may be related to a neural network.
vector<Operation> opsRemaining;

Operations that have been processed may be removed from the array. This solution may be a preferred implementation of the step of marking of the operations that are processed explained above.

A main loop of the code may process until the operation graph is fully scheduled and processed. The main loop may be defined as:

```
      void schedule() {
            do {
                  int inputTensorIndex = receiveNextInputLines();
                  Tensor inputTensor = _graph.inputTensor(inputTensorIndex);
                  opsRemaining = getAllOps();
                                              // collect all the operations in the graph
                  processGraphRecursive(inputTensor);
            } while (!done());
                           // done means all the output tensors are calculated in full depth
      }
```

In this main loop, the variable "inputTensor" may particularly refer in an embodiment to a component of the input tensor that has been received in full depth. For instance, if the component is an input line and if the input line is ready in full depth in the input tensor, its index is returned (i.e. "inputTensorIndex") so that inputTensor will particularly comprise and use said input line to execute "processGraphRecursive(inputTensor)".

The procedure processGraphRecursive() may define a recursive function, which traverses the operation graph:

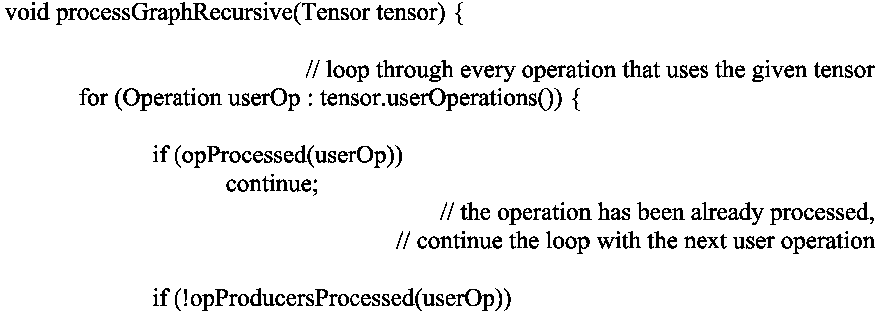

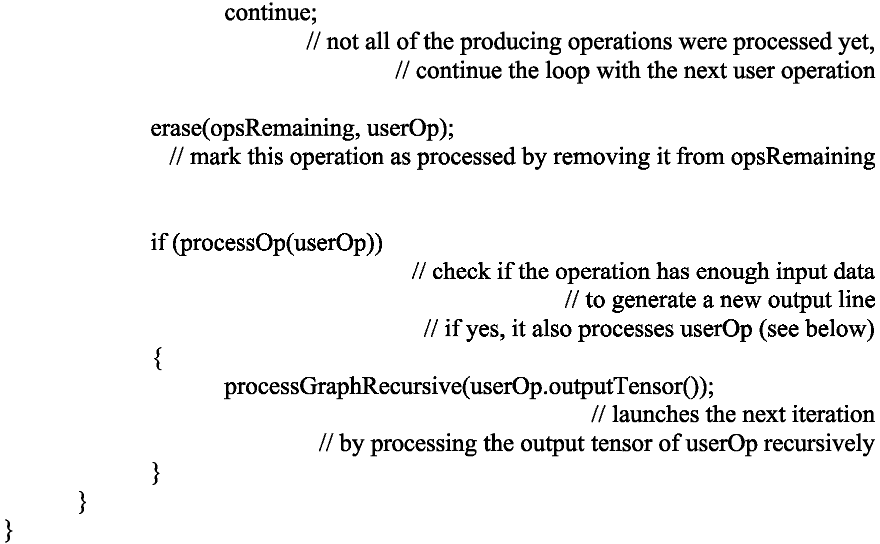

The procedure opProcessed() may be used to determine whether the operation has already been processed. This can be done by determining whether the operation is included in the opsRemaining array. The procedure opProcessed() may be implemented as follows:

```
      bool opProcessed(Operation op) {
            return !_opsRemaining.contains(op);
      }
```

The procedure opProducersProcessed() is used to determine, whether all parent operations have already been processed:

```
      bool opProducersProcessed(Operation op) {
            for (Operation producer : op.producers()) {
                  if (opsRemaining.contains(producer)) {
                         return false;
                   }
            }
            return true;
      }
```

This procedure may represent an implementation of interest of the determination whether "all producing operations of UserOperation have been processed" of the first pseudo code, i.e. of the optional step of determining whether all operations producing a resulting component in the first tensor have been processed that can be performed before step 308/408 in the methods 300 or 400, in some embodiments.

The procedure processOp() initiates processing of an operation. The operation may first verify whether a sufficient number of lines of an input tensor is present for the operation. This may depend on the filter kernel width and the state of processing of operations on a higher (embedding) layer. If this is the case, memory space for the output may be allocated, the result may be calculated, and lines of the input kernel that are no longer required may be de-allocated.

```
      bool processOp(Operation op) {
            if (hasEnoughInputLines(op)) {
                  allocate output line
                  calculate result
                  deallocate input lines not needed by this and any further operation
                  return true;
            } else {
                  return false;
            }
      }
```

It is to be understood that the previous first and second pseudo codes represent examples for use cases to exemplify implementation and processing of embodiments of the present disclosure. Many other implementations are possible, and the present disclosure is not limited by a particular example implementation.

Embodiments of the subject matter and the actions and operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, e.g., one or more modules of computer program instructions, encoded on a computer program carrier, for execution by, or to control the operation of, data processing apparatus. For example, a computer program carrier can include one or more computer-readable storage media that have instructions encoded or stored thereon. The carrier may be a tangible non-transitory computer-readable medium, such as a magnetic, magneto optical, or optical disk, a solid state drive, a random access memory (RAM), a read-only memory (ROM), or other types of media. Alternatively, or in addition, the carrier may be an artificially generated propagated signal, e.g., a machine-generated electrical, optical, or electromagnetic signal that is generated to encode information for transmission to suitable receiver apparatus for execution by a data processing apparatus. The computer storage medium can be or be part of a machine-readable storage device, a machine-readable storage substrate, a random or serial access memory device, or a combination of one or more of them. A computer storage medium is not a propagated signal.

A computer program, which may also be referred to or described as a program, software, a software application, an app, a module, a software module, an engine, a script, or code, can be written in any form of programming language, including compiled or interpreted languages, or declarative or procedural languages; and it can be deployed in any form, including as a stand-alone program or as a module, component, engine, subroutine, or other unit suitable for executing in a computing environment, which environment may include one or more computers interconnected by a data communication network in one or more locations.

A computer program may, but need not, correspond to a file in a file system. A computer program can be stored in a portion of a file that holds other programs or data, e.g., one or more scripts stored in a markup language document, in a single file dedicated to the program in question, or in multiple coordinated files, e.g., files that store one or more modules, sub programs, or portions of code.

Processors for execution of a computer program include, by way of example, both general- and special-purpose microprocessors, and any one or more processors of any kind of digital computer. Generally, a processor will receive the instructions of the computer program for execution as well as data from a non-transitory computer-readable medium coupled to the processor.

The term "data processing apparatus" encompasses all kinds of apparatuses, devices, and machines for processing data, including by way of example a programmable processor, a computer, or multiple processors or computers. Data processing apparatus can include special-purpose logic circuitry, e.g., an FPGA (field programmable gate array), an ASIC (application specific integrated circuit), or a GPU (graphics processing unit). The apparatus can also include, in addition to hardware, code that creates an execution environment for computer programs, e.g., code that constitutes processor firmware, a protocol stack, a database management system, an operating system, or a combination of one or more of them.

The processes and logic flows described in this specification can be performed by one or more computers or processors executing one or more computer programs to perform operations by operating on input data and generating output. The processes and logic flows can also be performed by special-purpose logic circuitry, e.g., an FPGA, an ASIC, or a GPU, or by a combination of special-purpose logic circuitry and one or more programmed computers.

Computers suitable for the execution of a computer program can be based on general or special-purpose microprocessors or both, or any other kind of central processing unit. Generally, a central processing unit will receive instructions and data from a read only memory or a random access memory or both. Elements of a computer can include a central processing unit for executing instructions and one or more memory devices for storing instructions and data. The central processing unit and the memory can be supplemented by, or incorporated in, special-purpose logic circuitry.

Generally, a computer will also include, or be operatively coupled to receive data from or transfer data to one or more storage devices. The storage devices can be, for example, magnetic, magneto optical, or optical disks, solid state drives, or any other type of non-transitory, computer-readable media. However, a computer need not have such devices. Thus, a computer may be coupled to one or more storage devices, such as, one or more memories, that are local and/or remote. For example, a computer can include one or more local memories that are integral components of the computer, or the computer can be coupled to one or more remote memories that are in a cloud network. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Components can be "coupled to" each other by being commutatively such as electrically or optically connected to one another, either directly or via one or more intermediate components. Components can also be "coupled to" each other if one of the components is integrated into the other. For example, a storage component that is integrated into a processor (e.g., an L2 cache component) is "coupled to" the processor.

To provide for interaction with a user, embodiments of the subject matter described in this specification can be implemented on, or configured to communicate with, a computer having a display device, e.g., a LCD (liquid crystal display) monitor, for displaying information to the user, and an input device by which the user can provide input to the computer, e.g., a keyboard and a pointing device, e.g., a mouse, a trackball or touchpad. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser, or by interacting with an app running on a user device, e.g., a smartphone or electronic tablet. Also, a computer can interact with a user by sending text messages or other forms of message to a personal device, e.g., a smartphone that is running a messaging application, and receiving responsive messages from the user in return.

This specification uses the term "configured to" in connection with systems, apparatus, and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. For special-purpose logic circuitry to be configured to perform particular operations or actions means that the circuitry has electronic logic that performs the operations or actions.

While this specification contains many specific embodiment details, these should not be construed as limitations on the scope of what is being claimed, which is defined by the claims themselves, but rather as descriptions of features that may be specific to particular embodiments. Certain features that are described in this specification in the context of separate embodiments can also be realized in combination in a single embodiment. Conversely, various features that are described in the context of a single embodiments can also be realized in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

While some embodiments have been described in detail, it is to be understood that aspects of the disclosure can take many forms. In particular, the claimed subject matter may be practiced or implemented differently from the examples described, and the described features and characteristics may be practiced or implemented in any combination. As one example, the processes depicted in the accompanying figures do not necessarily require the particular order shown, or sequential order, to achieve desirable results. In some cases, multitasking and parallel processing may be advantageous. The embodiments shown herein are intended to illustrate rather than to limit the invention as defined by the claims.

## Claims

1. A method for processing tensors, comprising:
providing a component of a first tensor in a memory unit;
determining one or more first operations that use at least the component of the first tensor as input;
iterating through the one or more first operations in a first loop, including:
for a current operation of the one or more first operations in the first loop, if there are enough data in the first tensor including the component of the first tensor for the current operation to calculate a component of a second tensor using the component of the first tensor:
calculating the component of the second tensor using the current operation applied at least to the component of the first tensor,
writing the component of the second tensor into the memory unit,
if any part of at least the component of the first tensor is no longer required by any next operation of the first loop, de-allocating the part of at least the component of the first tensor from the memory unit, and
launching and iterating through a second loop embedded in the first loop, the second loop including one or more second operations that use at least the component of the second tensor as input; and
if there are not enough data in the first tensor including the component of the first tensor for the current operation to calculate the component of the second tensor using the component of the first tensor, continuing with a next operation of the one or more first operations in the first loop.

2. The method according to claim 1, wherein the one or more first operations and the one or more second operations are operations of an operation graph indicating input and output dependencies between the operations.

3. The method according to claim 2, wherein the first loop is a parent loop of the second loop according to the operation graph.

4. The method according to claim 2 or 3, wherein the operation graph represents one or more operations to be executed based on an input tensor to generate an output tensor.

5. The method according to claim 4, wherein the first tensor is the input tensor to the operation graph.

6. The method according to claim 4 or 5, wherein the second tensor is the output tensor.

7. The method according to any one of the preceding claims, further comprising if the current operation is a last operation in the first loop, determining whether the first loop is embedded in another parent loop, and if the first loop is embedded in the other parent loop, returning to the other parent loop and continuing iteration through one or more operations in the other parent loop.

8. The method according to any one of the preceding claims, wherein iterating through the second loop includes:
for a second current operation of the one or more second operations in the second loop, if there are enough data in the second tensor including the component of the second tensor for the second current operation to calculate a component of a third tensor using the component of the second tensor:
calculating the component of the third tensor using the second current operation applied at least to the component of the second tensor,
writing the component of the third tensor into the memory unit,
if any part of at least the component of the second tensor is no longer required by any next operation of the second loop, de-allocating the part of at least the component of the second tensor from the memory unit, and
launching and iterating through a third loop embedded in the second loop, the third loop including one or more third operations that use at least the component of the third tensor as input; and
if there are not enough data in the second tensor including the component of the second tensor for the second current operation to calculate the component of the third tensor using the component of the second tensor, continuing with a next operation of the one or more second operations in the second loop.

9. The method according to any one of the preceding claims, wherein, for the current operation of the one or more first operations in the first loop, if there are enough data in the first tensor including the component of the first tensor for the current operation to calculate the component of the second tensor using the component of the first tensor, the method further includes:
allocating memory space for the component of the second tensor in the memory unit; and
writing the component of the second tensor into the allocated memory space of the memory unit.

10. The method according to any one of the preceding claims, wherein the first tensor is a three-dimensional tensor having a horizontal dimension, a vertical dimension and a depth dimension and the component of the first tensor is a group of data of the first tensor arranged at least partially in a dimension.

11. The method according to any of the preceding claims, wherein the one or more first operations are kernel operations having each a respective kernel with a respective kernel size, wherein calculating the component of the second tensor using the current operation applied at least to the component of the first tensor includes applying a kernel of the current operation on data of the component of the first tensor, the method preferably further comprising determining whether any part of at least the component of the first tensor is no longer required by any next operation of the first loop based on a maximum kernel size of kernels of next operations of the first loop.

12. The method according to any one of the preceding claims, further comprising, for the current operation of the one or more first operations in the first loop, if there are enough data in the first tensor including the component of the first tensor for the current operation to calculate the component of the second tensor using the component of the first tensor, marking the current operation as processed.

13. The method according to any one of the preceding claims, wherein the memory unit is a local memory unit of a device, wherein, preferably, providing the component of the first tensor in the memory unit comprises receiving the component of the first tensor from an external memory and storing the component of the first tensor in the local memory unit of the device.

14. One or more computer readable media storing instructions thereon that, when executed on a device, configure the device to perform a method according to any one of the preceding claims.

15. A device, comprising:
a local memory unit; and
a processing unit, wherein the processing unit is configured to perform a method according to any one of the claims 1 to 13.

## Patentansprüche

1. Verfahren zum Verarbeiten von Tensoren, umfassend:
Bereitstellen einer Komponente eines ersten Tensors in einer Speichereinheit;
Bestimmen einer oder mehrerer erster Operationen, die mindestens die Komponente des ersten Tensors als Eingabe verwenden;
Iterieren durch die eine oder mehreren ersten Operationen in einer ersten Schleife,
aufweisend:
für eine aktuelle Operation der einen oder mehreren ersten Operationen in der ersten Schleife, wenn es genug Daten in dem ersten Tensor, aufweisend die Komponente des ersten Tensors, für die aktuelle Operation gibt, um eine Komponente eines zweiten Tensors unter Verwendung der Komponente des ersten Tensors zu berechnen:
Berechnen der Komponente des zweiten Tensors unter Verwendung der aktuellen Operation, die mindestens auf die Komponente des ersten Tensors angewendet wird,
Schreiben der Komponente des zweiten Tensors in die Speichereinheit,
wenn irgendein Teil von mindestens der Komponente des ersten Tensors nicht länger durch irgendeine nächste Operation der ersten Schleife benötigt wird, Freigeben des Teils von mindestens der Komponente des ersten Tensors aus der Speichereinheit, und
Starten und Iterieren durch eine zweite Schleife, die in die erste Schleife eingebettet ist, wobei die zweite Schleife eine oder mehrere zweite Operationen aufweist, die mindestens die Komponente des zweiten Tensors als Eingabe verwenden; und
wenn es nicht genug Daten in dem ersten Tensor, aufweisend die Komponente des ersten Tensors, für die aktuelle Operation gibt, um die Komponente des zweiten Tensors unter Verwendung der Komponente des ersten Tensors zu berechnen, Fortfahren mit einer nächsten Operation der einen oder mehreren ersten Operationen in der ersten Schleife.

2. Verfahren nach Anspruch 1, wobei die eine oder mehreren ersten Operationen und die eine oder mehreren zweiten Operationen Operationen eines Operationsgraphen sind, der Eingabe- und Ausgabeabhängigkeiten zwischen den Operationen angibt.

3. Verfahren nach Anspruch 2, wobei die erste Schleife eine übergeordnete Schleife der zweiten Schleife gemäß dem Operationsgraphen ist.

4. Verfahren nach Anspruch 2 oder 3, wobei der Operationsgraph eine oder mehrere Operationen darstellt, die basierend auf einem Eingabetensor auszuführen sind, um einen Ausgabetensor zu erzeugen.

5. Verfahren nach Anspruch 4, wobei der erste Tensor der Eingabetensor für den Operationsgraphen ist.

6. Verfahren nach Anspruch 4 oder 5, wobei der zweite Tensor der Ausgabetensor ist.

7. Verfahren nach einem der vorhergehenden Ansprüche, ferner umfassend, wenn die aktuelle Operation eine letzte Operation in der ersten Schleife ist, Bestimmen, ob die erste Schleife in eine andere übergeordnete Schleife eingebettet ist, und wenn die erste Schleife in die andere übergeordnete Schleife eingebettet ist, Zurückkehren zu der anderen übergeordneten Schleife und Fortfahren mit der Iteration durch eine oder mehrere Operationen in der anderen übergeordneten Schleife.

8. Verfahren nach einem der vorhergehenden Ansprüche, wobei das Iterieren durch die zweite Schleife aufweist:
für eine zweite aktuelle Operation der einen oder mehreren zweiten Operationen in der zweiten Schleife, wenn es genug Daten in dem zweiten Tensor, aufweisend die Komponente des zweiten Tensors, für die zweite aktuelle Operation gibt, um eine Komponente eines dritten Tensors unter Verwendung der Komponente des zweiten Tensors zu berechnen:
Berechnen der Komponente des dritten Tensors unter Verwendung der zweiten aktuellen Operation, die mindestens auf die Komponente des zweiten Tensors angewendet wird,
Schreiben der Komponente des dritten Tensors in die Speichereinheit,
wenn irgendein Teil von mindestens der Komponente des zweiten Tensors nicht länger durch irgendeine nächste Operation der zweiten Schleife benötigt wird, Freigeben des Teils von mindestens der Komponente des zweiten Tensors aus der Speichereinheit, und
Starten und Iterieren durch eine dritte Schleife, die in die zweite Schleife eingebettet ist, wobei die dritte Schleife eine oder mehrere dritte Operationen aufweist, die mindestens die Komponente des dritten Tensors als Eingabe verwenden; und
wenn es nicht genug Daten in dem zweiten Tensor, aufweisend die Komponente des zweiten Tensors, für die zweite aktuelle Operation gibt, um die Komponente des dritten Tensors unter Verwendung der Komponente des zweiten Tensors zu berechnen, Fortfahren mit einer nächsten Operation der einen oder mehreren zweiten Operationen in der zweiten Schleife.

9. Verfahren nach einem der vorhergehenden Ansprüche, wobei für die aktuelle Operation der einen oder mehreren ersten Operationen in der ersten Schleife, wenn es genug Daten in dem ersten Tensor, aufweisend die Komponente des ersten Tensors, für die aktuelle Operation gibt, um die Komponente des zweiten Tensors unter Verwendung der Komponente des ersten Tensors zu berechnen, das Verfahren ferner aufweist:
Zuweisen von Speicherplatz für die Komponente des zweiten Tensors in der Speichereinheit; und
Schreiben der Komponente des zweiten Tensors in den zugewiesenen Speicherplatz der Speichereinheit.

10. Verfahren nach einem der vorhergehenden Ansprüche, wobei der erste Tensor ein dreidimensionaler Tensor mit einer horizontalen Dimension, einer vertikalen Dimension und einer Tiefendimension ist und die Komponente des ersten Tensors eine Gruppe von Daten des ersten Tensors ist, die zumindest teilweise in einer Dimension angeordnet sind.

11. Verfahren nach einem der vorhergehenden Ansprüche, wobei die eine oder mehreren ersten Operationen Kernel-Operationen sind, die jeweils einen jeweiligen Kernel mit einer jeweiligen Kernelgröße aufweisen, wobei das Berechnen der Komponente des zweiten Tensors unter Verwendung der aktuellen Operation, die mindestens auf die Komponente des ersten Tensors angewendet wird, ein Anwenden eines Kernels der aktuellen Operation auf Daten der Komponente des ersten Tensors aufweist, wobei das Verfahren vorzugsweise ferner ein Bestimmen, ob irgendein Teil mindestens der Komponente des ersten Tensors nicht länger durch irgendeine nächste Operation der ersten Schleife benötigt wird, basierend auf einer maximalen Kernelgröße von Kerneln von nächsten Operationen der ersten Schleife umfasst.

12. Verfahren nach einem der vorhergehenden Ansprüche, ferner umfassend, für die aktuelle Operation der einen oder mehreren ersten Operationen in der ersten Schleife, wenn es genug Daten in dem ersten Tensor, aufweisend die Komponente des ersten Tensors, für die aktuelle Operation gibt, um die Komponente des zweiten Tensors unter Verwendung der Komponente des ersten Tensors zu berechnen, Markieren der aktuellen Operation als verarbeitet.

13. Verfahren nach einem der vorhergehenden Ansprüche, wobei die Speichereinheit eine lokale Speichereinheit einer Vorrichtung ist, wobei vorzugsweise das Bereitstellen der Komponente des ersten Tensors in der Speichereinheit ein Empfangen der Komponente des ersten Tensors von einem externen Speicher und ein Speichern der Komponente des ersten Tensors in der lokalen Speichereinheit der Vorrichtung umfasst.

14. Ein oder mehrere computerlesbare Datenträger, die Befehle darauf speichern, die, wenn sie auf einer Vorrichtung ausgeführt werden, die Vorrichtung einrichten, ein Verfahren nach einem der vorhergehenden Ansprüche durchzuführen.

15. Vorrichtung, umfassend:
eine lokale Speichereinheit; und
eine Verarbeitungseinheit, wobei die Verarbeitungseinheit eingerichtet ist, ein Verfahren nach einem der Ansprüche 1 bis 13 durchzuführen.

## Revendications

1. Procédé de traitement de tenseurs, comprenant :
la fourniture d'un composant d'un premier tenseur dans une unité de mémoire ;
la détermination d'une ou plusieurs premières opérations qui utilisent au moins le composant du premier tenseur en tant qu'entrée ;
l'itération des une ou plusieurs premières opérations dans une première boucle, incluant :
pour une opération actuelle des une ou plusieurs premières opérations dans la première boucle, s'il y a suffisamment de données dans le premier tenseur incluant le composant du premier tenseur pour l'opération actuelle pour calculer un composant d'un deuxième tenseur en utilisant le composant du premier tenseur :
le calcul du composant du deuxième tenseur en utilisant l'opération actuelle appliquée au moins au composant du premier tenseur,
l'écriture du composant du deuxième tenseur dans l'unité de mémoire,
si une partie quelconque d'au moins le composant du premier tenseur n'est plus requise par une opération suivante quelconque de la première boucle, la désallocation de la partie d'au moins le composant du premier tenseur de l'unité de mémoire, et
le lancement et l'itération d'une deuxième boucle intégrée dans la première boucle, la deuxième boucle incluant une ou plusieurs secondes opérations qui utilisent au moins le composant du deuxième tenseur en tant qu'entrée ; et
s'il n'y a pas suffisamment de données dans le premier tenseur incluant le composant du premier tenseur pour l'opération actuelle pour calculer le composant du deuxième tenseur en utilisant le composant du premier tenseur, la poursuite d'une opération suivante des une ou plusieurs premières opérations dans la première boucle.

2. Procédé selon la revendication 1, dans lequel les une ou plusieurs premières opérations et les une ou plusieurs secondes opérations sont des opérations d'un graphique d'opérations indiquant des dépendances d'entrée et de sortie entre les opérations.

3. Procédé selon la revendication 2, dans lequel la première boucle est une boucle parente de la deuxième boucle selon le graphique d'opérations.

4. Procédé selon la revendication 2 ou 3, dans lequel le graphique d'opérations représente une ou plusieurs opérations à exécuter sur la base d'un tenseur d'entrée pour générer un tenseur de sortie.

5. Procédé selon la revendication 4, dans lequel le premier tenseur est le tenseur d'entrée du graphique d'opérations.

6. Procédé selon la revendication 4 ou 5, dans lequel le deuxième tenseur est le tenseur de sortie.

7. Procédé selon l'une quelconque des revendications précédentes, comprenant en outre si l'opération actuelle est une dernière opération dans la première boucle, la détermination si la première boucle est intégrée dans une autre boucle parente, et si la première boucle est intégrée dans l'autre boucle parente, le retour à l'autre boucle parente et la poursuite de l'itération d'une ou plusieurs opérations dans l'autre boucle parente.

8. Procédé selon l'une quelconque des revendications précédentes, dans lequel l'itération de la deuxième boucle inclut :
pour une seconde opération actuelle des une ou plusieurs secondes opérations dans la deuxième boucle, s'il y a suffisamment de données dans le deuxième tenseur incluant le composant du deuxième tenseur pour la seconde opération actuelle pour calculer un composant d'un troisième tenseur en utilisant le composant du deuxième tenseur :
le calcul du composant du troisième tenseur en utilisant la seconde opération actuelle appliquée au moins au composant du deuxième tenseur,
l'écriture du composant du troisième tenseur dans l'unité de mémoire,
si une partie quelconque d'au moins le composant du deuxième tenseur n'est plus requise par une opération suivante quelconque de la deuxième boucle, la désallocation de la partie d'au moins le composant du deuxième tenseur de l'unité de mémoire, et
le lancement et l'itération d'une troisième boucle intégrée dans la deuxième boucle, la troisième boucle incluant une ou plusieurs troisièmes opérations qui utilisent au moins le composant du troisième tenseur en tant qu'entrée ; et
s'il n'y a pas suffisamment de données dans le deuxième tenseur incluant le composant du deuxième tenseur pour la seconde opération actuelle pour calculer le composant du troisième tenseur en utilisant le composant du deuxième tenseur, la poursuite d'une opération suivante des une ou plusieurs secondes opérations dans la deuxième boucle.

9. Procédé selon l'une quelconque des revendications précédentes, dans lequel, pour l'opération actuelle des une ou plusieurs premières opérations dans la première boucle, s'il y a suffisamment de données dans le premier tenseur incluant le composant du premier tenseur pour l'opération actuelle pour calculer le composant du deuxième tenseur en utilisant le composant du premier tenseur, le procédé inclut en outre :
l'allocation d'espace mémoire pour le composant du deuxième tenseur dans l'unité de mémoire ; et
l'écriture du composant du deuxième tenseur dans l'espace mémoire alloué de l'unité de mémoire.

10. Procédé selon l'une quelconque des revendications précédentes, dans lequel le premier tenseur est un tenseur tridimensionnel ayant une dimension horizontale, une dimension verticale et une dimension de profondeur et le composant du premier tenseur est un groupe de données du premier tenseur agencé au moins partiellement dans une dimension.

11. Procédé selon l'une quelconque des revendications précédentes, dans lequel les une ou plusieurs premières opérations sont des opérations de noyau ayant chacune un noyau respectif avec une taille de noyau respective, dans lequel le calcul du composant du deuxième tenseur en utilisant l'opération actuelle appliquée au moins au composant du premier tenseur inclut l'application d'un noyau de l'opération actuelle sur des données du composant du premier tenseur, le procédé comprenant de préférence en outre la détermination si une partie quelconque d'au moins le composant du premier tenseur n'est plus requise par une opération suivante quelconque de la première boucle sur la base d'une taille de noyau maximale de noyaux d'opérations suivantes de la première boucle.

12. Procédé selon l'une quelconque des revendications précédentes, comprenant en outre, pour l'opération actuelle des une ou plusieurs premières opérations dans la première boucle, s'il y a suffisamment de données dans le premier tenseur incluant le composant du premier tenseur pour l'opération actuelle pour calculer le composant du deuxième tenseur en utilisant le composant du premier tenseur, le marquage de l'opération actuelle comme traitée.

13. Procédé selon l'une quelconque des revendications précédentes, dans lequel l'unité de mémoire est une unité de mémoire locale d'un dispositif, dans lequel, de préférence, la fourniture du composant du premier tenseur dans l'unité de mémoire comprend la réception du composant du premier tenseur à partir d'une mémoire externe et le stockage du composant du premier tenseur dans l'unité de mémoire locale du dispositif.

14. Un ou plusieurs supports lisibles par ordinateur stockant des instructions sur ceux-ci qui, lorsqu'elles sont exécutées sur un dispositif, configurent le dispositif pour réaliser un procédé selon l'une quelconque des revendications précédentes.

15. Dispositif, comprenant :
une unité de mémoire locale ; et
une unité de traitement, dans lequel l'unité de traitement est configurée pour réaliser un procédé selon l'une quelconque des revendications 1 à 13.
